# EUROPEAN PATENT APPLICATION

(11) **EP 4 613 468 A1**
(43) Date of publication of application: **10.09.2025**
(21) Application number: 25157784.7
(22) Date of filing: 13.02.2025
(51) Int. Cl.: B29C 70/88, B29C 64/188, B29C 65/02, B29C 65/00, B33Y 40/20, B29C 70/82

(54) **METHODS AND SYSTEMS FOR REINFORCING ADDITIVELY MANUFACTURED STRUCTURES**

(30) Priority: 05.03.2024 US 202463561374 P; 30.12.2024 US 202419004839
(71) Applicant: The Boeing Company, Arlington, VA 22202 (US)
(72) Inventor: Crothers, Phillip J., Arlington, 22202 (US)
(74) Representative: Witte, Weller & Partner Patentanwälte mbB

(57) **Abstract**

A method for reinforcing an additively manufactured structure includes draping a textile substrate including one or more conductive fibers over at least a portion of a surface of the additively manufactured structure. The additively manufactured structure includes a thermoplastic matrix material. An electric current is applied to a conductive fiber to heat the thermoplastic matrix material of the additively manufactured structure for consolidation of the textile substrate with the thermoplastic matrix material to form a thermoplastic composite on the surface. A system for reinforcing an additively manufactured structure includes a fabrication tool set, an electrical power source and a control device. The control device and the electrical power source apply the electric current to the conductive fiber to heat the thermoplastic matrix material for consolidation of the textile substrate with the thermoplastic matrix material to form a thermoplastic composite.

## Description

### FIELD

The present disclosure relates generally to fiber reinforcement of additively manufactured structures and, particularly, to adding a thermoplastic composite on a surface of additively manufactured structures. Various arrangements of one or more thermoplastic composites on the surface of additively manufactured structures. For example, pieces of textile substrates can be arranged on the surface based on shapes and contours of the additively manufactured structure. The textile substrates are consolidated with a thermoplastic matrix material of the additively manufactured structure to form the thermoplastic composites. The resulting fiber-reinforced additively manufactured structures have numerous applications in aircraft interiors. Additionally, the fiber-reinforced additively manufactured structures have applications as construction materials and components of system equipment and assemblies.

### BACKGROUND

The structural integrity of complex additively manufactured structures, including three-dimensional printed parts, exhibit inherent weakness related to poor layer-to-layer adhesion. Accordingly, those skilled in the art continue with research and development efforts to provide techniques for strengthening and reinforcing additively manufactured structures.

### SUMMARY

Disclosed are examples of methods and systems for reinforcing an additively manufactured structure. The following is a non-exhaustive list of examples, which may or may not be claimed, of the subject matter according to the present disclosure.

In an example, the disclosed method for reinforcing an additively manufactured structure includes: (1) draping a textile substrate that includes one or more conductive fibers over at least a portion of a surface of the additively manufactured structure, the additively manufactured structure including a thermoplastic matrix material; and (2) applying an electric current to at least one conductive fiber of the one or more conductive fibers to heat the thermoplastic matrix material of the additively manufactured structure for consolidation of the textile substrate with the thermoplastic matrix material to form a thermoplastic composite on the surface.

In another example, the disclosed method for reinforcing an additively manufactured structure includes: (1) adding a first conductive fiber to a fiber reinforcement fabric substrate to form a textile substrate, the first conductive fiber forming a first path distributed about at least a first area of the textile substrate; (2) cutting the textile substrate to form a tailored fabric substrate that fits a surface of the additively manufactured structure, the additively manufactured structure including a thermoplastic matrix material; (3) wrapping the tailored fabric substrate around the surface; and (4) applying an electric current to the first conductive fiber to heat the thermoplastic matrix material of the additively manufactured structure for consolidation of the tailored fabric substrate with the thermoplastic matrix material to form a first thermoplastic composite on the surface and thereby form a fiber-reinforced additively manufactured structure.

In an example, the disclosed system for reinforcing an additively manufactured structure includes a fabrication tool set, an electrical power source and a control device. The control device in operative communication with the electrical power source to selectively apply and remove electric current from one or more conductive fibers of a textile substrate. The textile substrate is configured for draping over at least a portion of a surface of the additively manufactured structure. The additively manufactured structure includes a thermoplastic matrix material. The control device and the electrical power source are configured to apply the electric current to at least one conductive fiber of the one or more conductive fibers to heat the thermoplastic matrix material of the additively manufactured structure for consolidation of the textile substrate with the thermoplastic matrix material to form a thermoplastic composite on the surface.

Other examples of the disclosed methods and systems for reinforcing an additively manufactured structure will become apparent from the following detailed description, the accompanying drawings and the appended claims.

### BRIEF DESCRIPTION OF THE DRAWINGS

Fig. 1 is a flow diagram of an example of a method for reinforcing an additively manufactured structure;
Fig. 2A is a perspective view of an example of an additively manufactured structure;
Fig. 2B is a cross-sectional view of the example of the additively manufactured structure shown in Fig. 2A;
Fig. 3 is a top view of an example of a textile substrate;
Fig. 4 is a functional block diagram showing an example of the application of electric current to conductive fibers of the textile substrate of Fig. 3 to form a thermoplastic composite on a portion of the surface of the additively manufactured structure of Fig. 2;
Fig. 5, in combination with Fig. 1, is a flow diagram of another example of a method for reinforcing an additively manufactured structure;
Fig. 6, in combination with Fig. 1, is a flow diagram of yet another example of a method for reinforcing an additively manufactured structure;
Fig. 7 is a top view of an example of a textile fabric sheet marked for cutting one or more textile substrates;
Fig. 8 is a flow diagram of an example of the draping of a textile substrate in the method for reinforcing an additively manufactured structure of Fig. 1;
Fig. 9 is a perspective view of an example of a tailored substrate cut to fit a portion of the surface of the additively manufactured structure after tacking the textile substrate to the surface;
Fig. 10, in combination with Fig. 1, is a flow diagram of still another example of a method for reinforcing an additively manufactured structure;
Fig. 11, in combination with Fig. 1, is a flow diagram of still yet another example of a method for reinforcing an additively manufactured structure;
Fig. 12, in combination with Fig. 1, is a flow diagram of another example of a method for reinforcing an additively manufactured structure;
Fig. 13, in combination with Fig. 1, is a flow diagram of yet another example of a method for reinforcing an additively manufactured structure;
Fig. 14, in combination with Fig. 1, is a flow diagram of still another example of a method for reinforcing an additively manufactured structure;
Fig. 15, in combination with Fig. 1, is a flow diagram of still yet another example of a method for reinforcing an additively manufactured structure;
Fig. 16, in combination with Fig. 1, is a flow diagram of another example of a method for reinforcing an additively manufactured structure;
Figs. 17A-C are top views of examples of first, second and third textile substrates;
Fig. 18 is a functional block diagram showing an example of the application of electric current to conductive fibers of first, second and third textile substrates to form first, second and third thermoplastic composites on portions of the surface of the additively manufactured structure of Fig. 2;
Fig. 19, in combination with Figs. 1 and 16, is a flow diagram of yet another example of a method for reinforcing an additively manufactured structure;
Fig. 20, in combination with Fig. 1, is a flow diagram of still another example of a method for reinforcing an additively manufactured structure;
Fig. 21 is a top view of another example of a textile substrate;
Fig. 22, in combination with Figs. 1 and 20, is a flow diagram of still yet another example of a method for reinforcing an additively manufactured structure;
Fig. 23 is a flow diagram showing examples of the adding of the one or more conductive fibers in the method for reinforcing an additively manufactured structure of Fig. 20;
Fig. 24 is a top view of an example of a carrier sheet marked for cutting one or more carrier substrates;
Fig. 25, in combination with Figs. 1 and 20, is a flow diagram of another example of a method for reinforcing an additively manufactured structure;
Figs. 26A-C are top views of additional examples of first, second and third textile substrates;
Fig. 27 is a functional block diagram showing another example of application of electric current to conductive fibers of first, second and third textile substrates to form first, second and third thermoplastic composites on portions of the surface of the additively manufactured structure of Fig. 2;
Fig. 28, in combination with Figs. 1, 20 and 25, is a flow diagram of yet another example of a method for reinforcing an additively manufactured structure;
Fig. 29 is a flow diagram of still another example of a method for reinforcing an additively manufactured structure;
Fig. 30 is a top view of an example of a textile substrate marked for cutting a tailored fabric substrate;
Fig. 31 is a top view of an example of a tailored fabric substrate of Fig. 30 after being cut from the textile substrate;
Fig. 32 is a functional block diagram showing an example of application of electric current to first, second and third conductive fibers of the tailored fabric substrate of Fig. 31 to form first, second and third thermoplastic composites on portions of the surface of the additively manufactured structure of Fig. 2;
Fig. 33 is a flow diagram showing examples of the adding of the first conductive fiber in the method for reinforcing an additively manufactured structure of Fig. 29;
Fig. 34 is a flow diagram of an example of the wrapping of the tailored fabric substrate in the method for reinforcing an additively manufactured structure of Fig. 29;
Fig. 35 is a perspective view of an example of a tailored substrate cut to fit a portion of the surface of the additively manufactured structure after tacking the tailored fabric substrate to the surface;
Fig. 36, in combination with Fig. 29, is a flow diagram of still yet another example of a method for reinforcing an additively manufactured structure;
Fig. 37, in combination with Fig. 29, is a flow diagram of another example of a method for reinforcing an additively manufactured structure;
Fig. 38, in combination with Figs. 29 and 37, is a flow diagram of yet another example of a method for reinforcing an additively manufactured structure;
Fig. 39 is a functional block diagram of an example of a system for reinforcing an additively manufactured structure;
Fig. 40 is a functional block diagram of another example of a system for reinforcing an additively manufactured structure;
Fig. 41 is a block diagram of aircraft production and service methodology that implements one or more of the examples of methods for reinforcing an additively manufactured structure disclosed herein to produce components of the aircraft; and
Fig. 42 is a schematic illustration of an aircraft that incorporates one or more examples of components produced using one or more of the examples of methods for reinforcing an additively manufactured structure disclosed herein.

### DETAILED DESCRIPTION

The various examples of methods 100, 500, 600, 1000, 1100, 1200, 1300, 1400, 1500, 1600, 1900, 2000, 2200, 2500, 2800, 2900, 3600, 3700, 3800 and systems 3900, 4000 for reinforcing additively manufactured structures 200 disclosed herein identify techniques for creating a thermoplastic composite 404 on a surface 210 of the additively manufactured structure 200. For example, the techniques establish processes for fabrication of fiber-reinforced three-dimensional printed components for aircraft interiors or building structures. The parts are fabricated through the lamination of tailored fiber placement pre-forms on three-dimensional printed parts. The fiber pre-forms enable structural and artistic patterns to be embedded within plastic surfaces. Lamination can be achieved through passing electric current through the fiber reinforcement directly to generate heat to enable self-lamination into the base thermoplastic materials of the three-dimensional printed component.

The methods 100, 500, 600, 1000, 1100, 1200, 1300, 1400, 1500, 1600, 1900, 2000, 2200, 2500, 2800, 2900, 3600, 3700, 3800 and systems 3900, 4000 disclosed herein increase the structural integrity of complex three-dimensional printed parts, particularly in view of the inherent weakness related to layer adhesion by incorporating carbon fiber. The various techniques remove the need for molds when fabricating fiber composites. Additionally, tailored fiber placement techniques overcome the need for a robotic end effector that limits the geometric size of the end component/structure. The disclosed methods and systems enable highly complex designs and mass customization. The methods and systems pass electrical current through fiber reinforcement (e.g., carbon) directly. The fiber is then directly heated to the temperature required to fuse with the 3D printed material, enabling labor-free joining with structural integrity.

The various methods and systems disclosed herein involve the combination of fused deposition modeling using three-dimensional printing, tailored fiber placement and electrically heating the tailored fiber placement. The techniques laminate the tailored fiber placement preform on three dimensional printed parts via electrical heating to melt the tailored fiber placement into the three-dimensional print. For example, the methods and systems involve laminating the carbon fiber through the direct application of electrical current to heat and melt the fiber into the three-dimensional printed material, rather than using a secondary consolidation process to join the carbon fiber on to the printed part. This includes direct application of current through the tailored fiber placement preforms to join to the three-dimensional printed components.

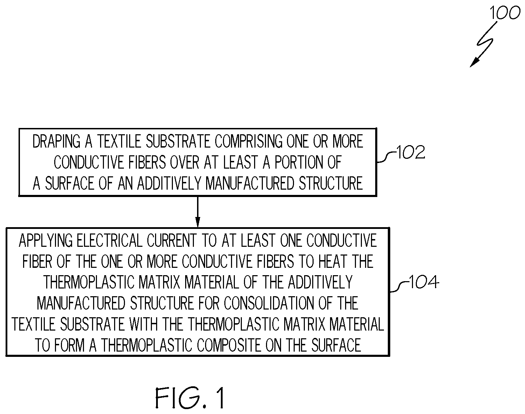

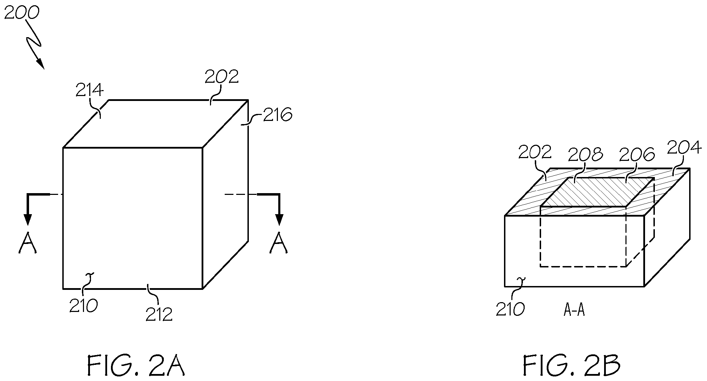

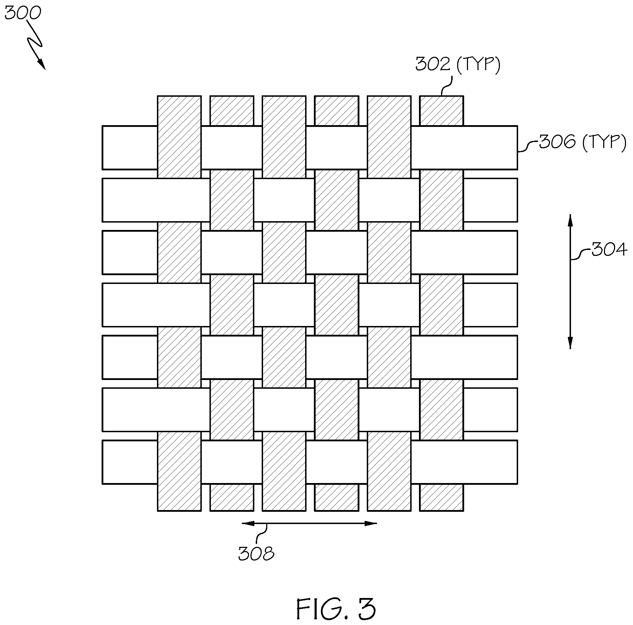

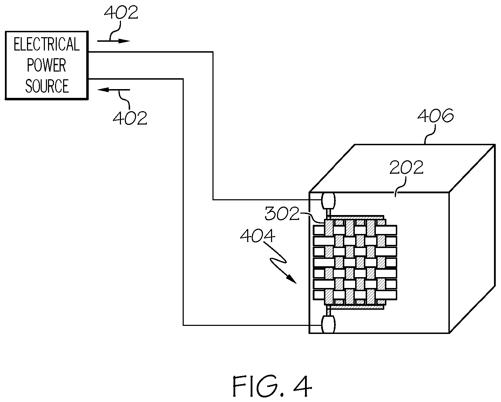

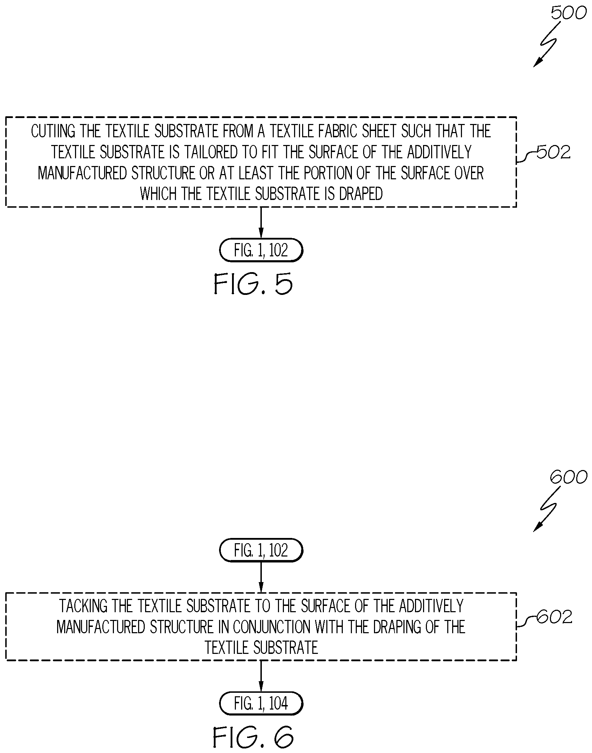

Referring generally to Figs. 1, 2A-B, 3-16, 17A-C, 18-25, 26A-C, 27, 28 and 39, by way of examples, the present disclosure is directed to a method 100, 500, 600, 1000, 1100, 1200, 1300, 1400, 1500, 1600, 1900 for reinforcing an additively manufactured structure 200. Fig. 1 provides an example of the method 100 for reinforcing an additively manufactured structure 200. Fig. 2A provides an example of an additively manufactured structure 200. Fig. 2B provides a cross-sectional view of the additively manufactured structure 200. Fig. 3 provides an example of a textile substrate 300. Fig. 4 shows an example of the application of electric current 402 to conductive fibers 302 of the textile substrate 300 to form a thermoplastic composite 404 on a portion 212 of the surface 210 of the additively manufactured structure 200. Fig. 5, in combination with Fig. 1, provides an example of the method 500 for reinforcing an additively manufactured structure 200. Fig. 6, in combination with Fig. 1, provides an example of the method 600 for reinforcing an additively manufactured structure 200.

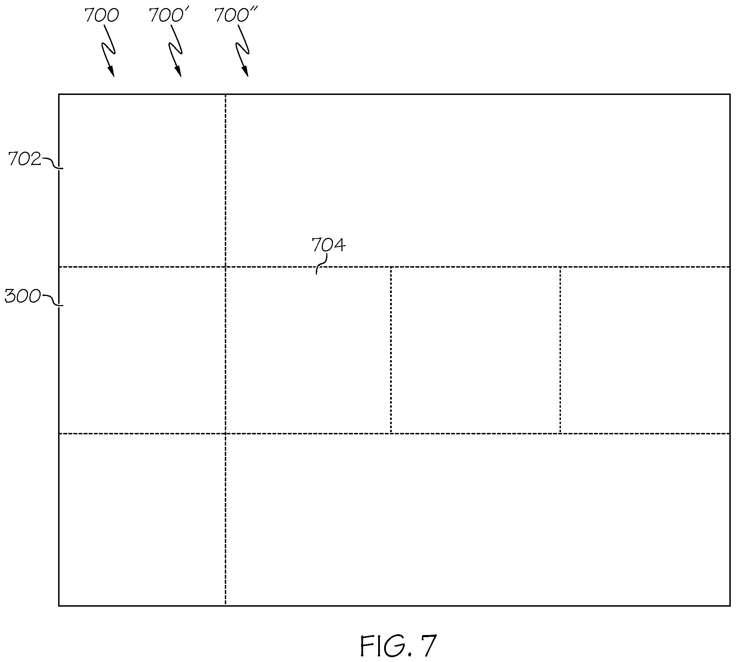

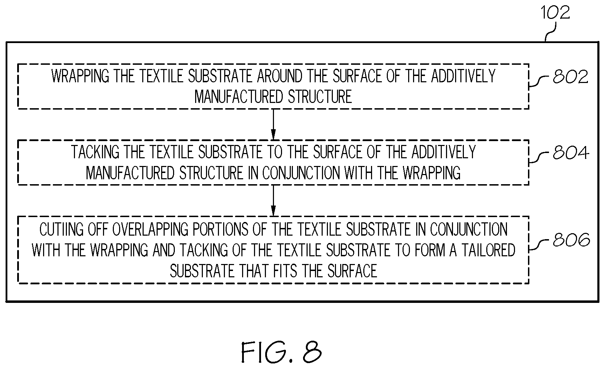

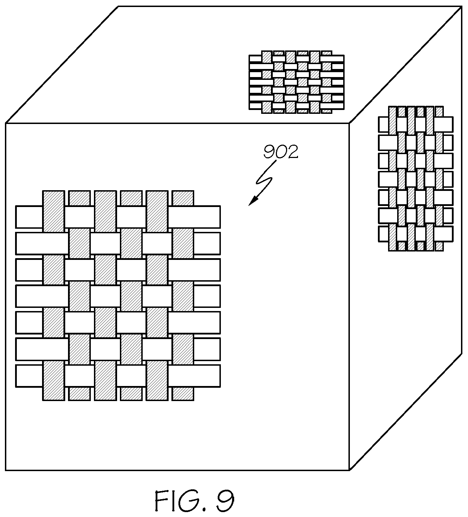

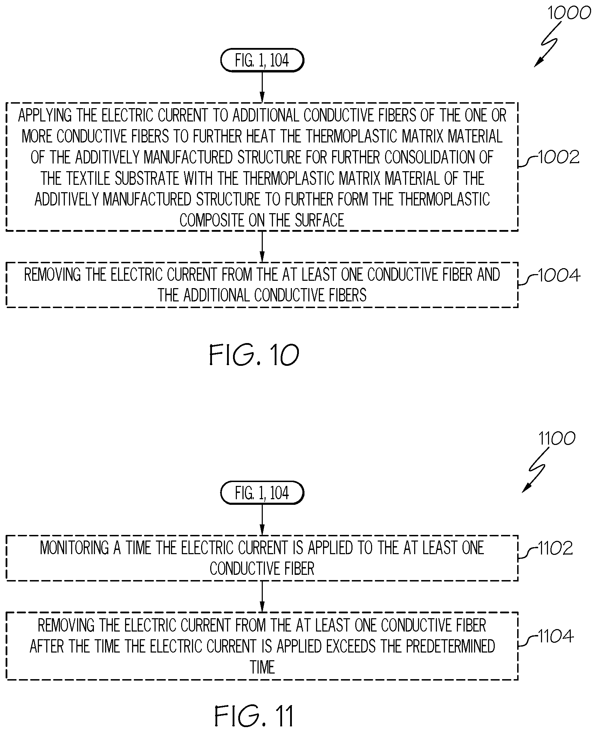

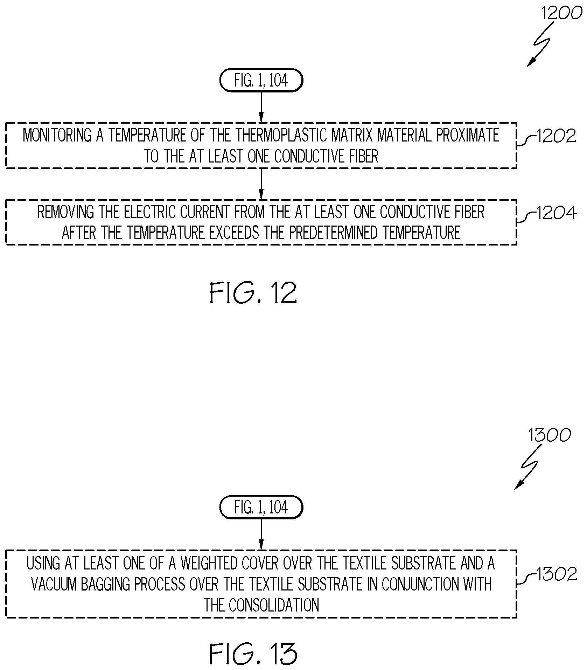

Fig. 7 provides an example of a textile fabric sheet 700 marked for cutting one or more textile substrates 300, 702, 704. Fig. 8 provides an example of the draping 102 of a textile substrate in the method 100 for reinforcing an additively manufactured structure 200 of Fig. 1. Fig. 9 provides an example of a tailored substrate 902 cut to fit the portion 212 of the surface 210 of the additively manufactured structure 200 after tacking the textile substrate 300 to the surface 210. Fig. 10, in combination with Fig. 1, provides an example of the method 1000 for reinforcing an additively manufactured structure 200. Fig. 11, in combination with Fig. 1, provides an example of the method 1100 for reinforcing an additively manufactured structure 200. Fig. 12, in combination with Fig. 1, provides an example of the method 1200 for reinforcing an additively manufactured structure 200. Fig. 13, in combination with Fig. 1, provides an example of the method 1300 for reinforcing an additively manufactured structure.

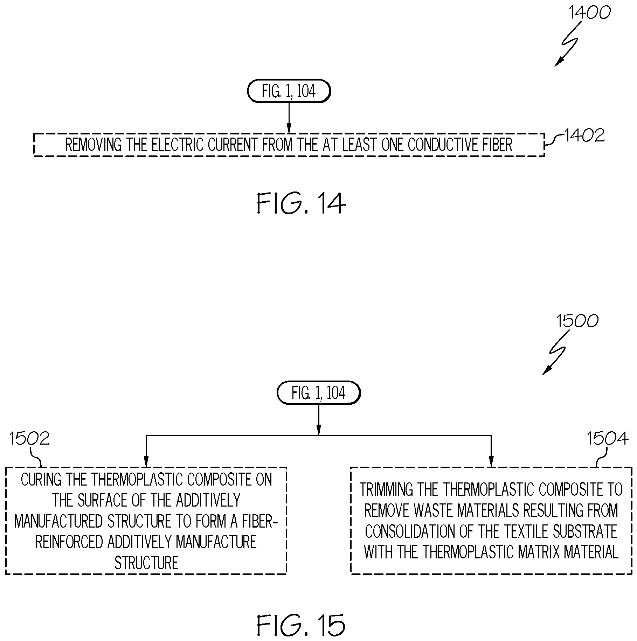

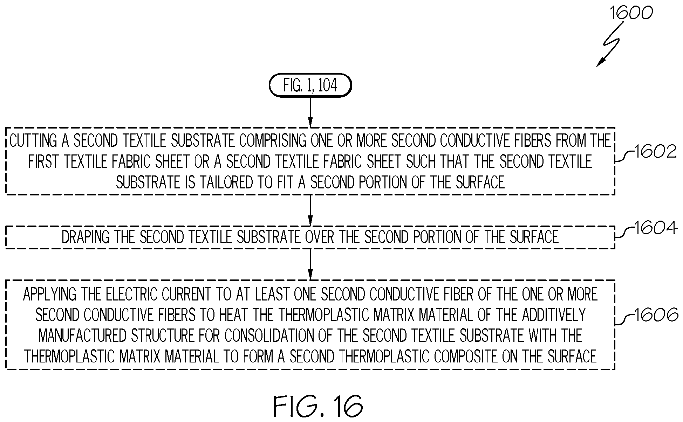

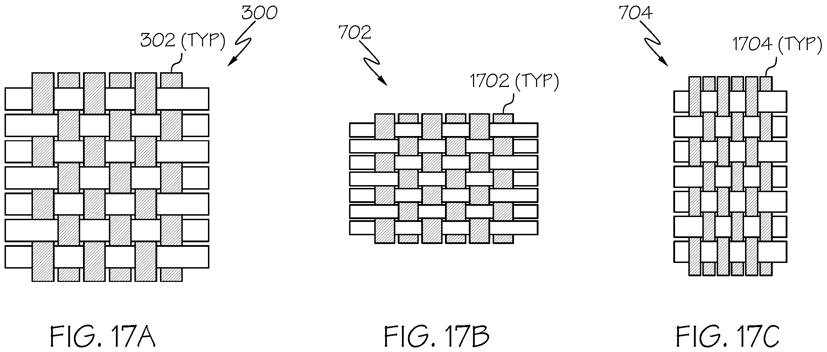

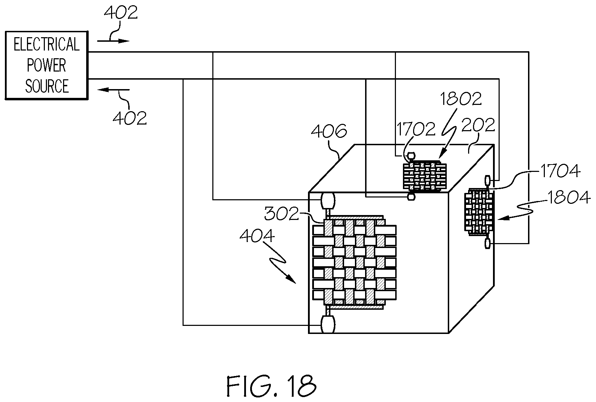

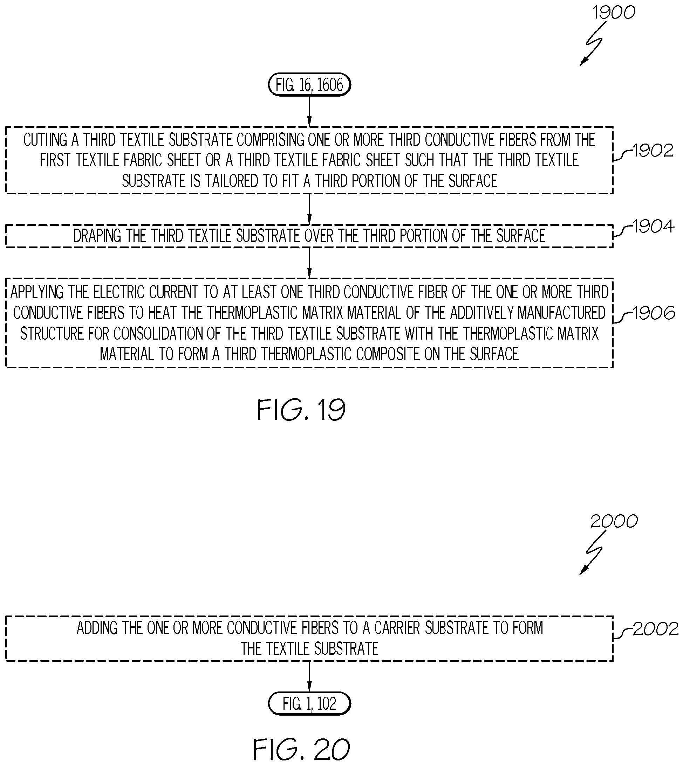

Fig. 14, in combination with Fig. 1, provides an example of the method 1400 for reinforcing an additively manufactured structure 200. Fig. 15, in combination with Fig. 1, provides an example of the method 1500 for reinforcing an additively manufactured structure 200. Fig. 16, in combination with Fig. 1, provides an example of the method 1600 for reinforcing an additively manufactured structure. Figs. 17A-C provides examples of first, second and third textile substrates 300, 702, 704. Fig. 18 shows an example of the application of electric current 402 to conductive fibers 302, 1702, 1704 of first, second and third textile substrates 300, 702, 704 to form first, second and third thermoplastic composites 404, 1802, 1804 on portions 212, 214, 216 of the surface 210 of the additively manufactured structure 200. Fig. 19, in combination with Figs. 1 and 16, provides an example of the method 1900 for reinforcing an additively manufactured structure 200.

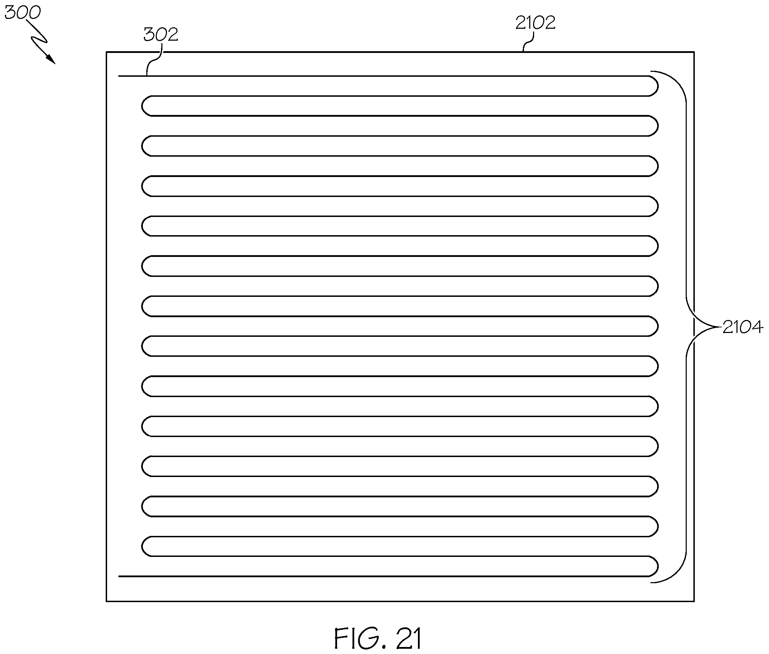

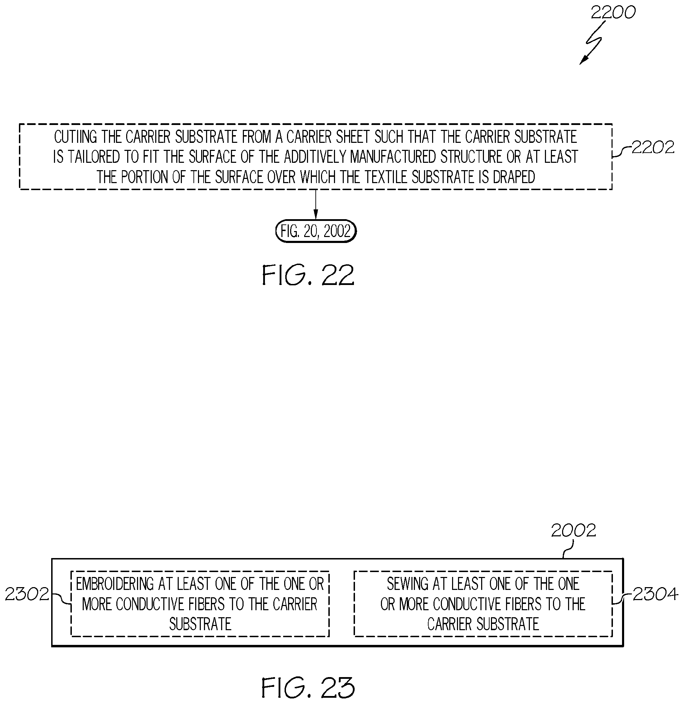

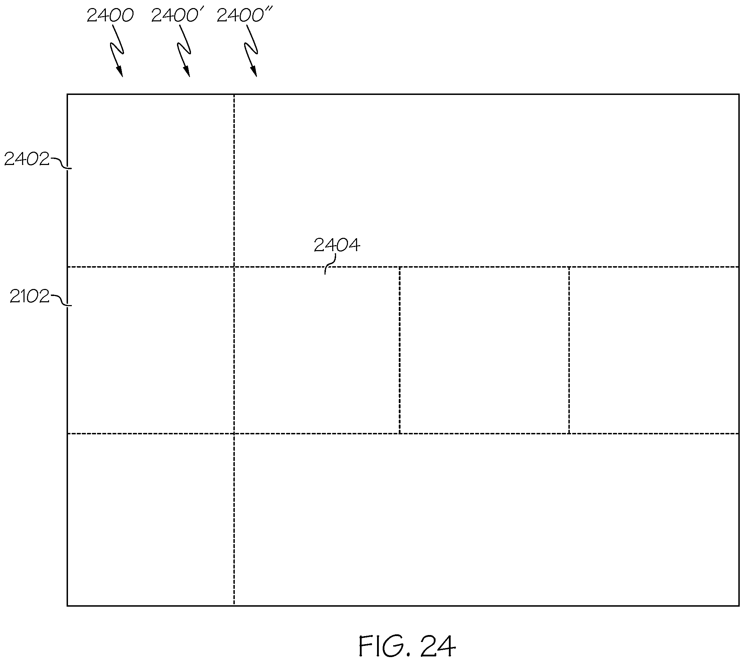

Fig. 20, in combination with Fig. 1, provides an example of the method 2000 for reinforcing an additively manufactured structure 200. Fig. 21 provides another example of a textile substrate 300. Fig. 22, in combination with Figs. 1 and 20, provides an example of the method 2200 for reinforcing an additively manufactured structure 200. Fig. 23 provides examples of the adding 2002 of the one or more conductive fibers 302 in the method 2000 for reinforcing an additively manufactured structure 200. Fig. 24 provides an example of a carrier sheet 2400 marked for cutting one or more carrier substrates 2102, 2402, 2404.

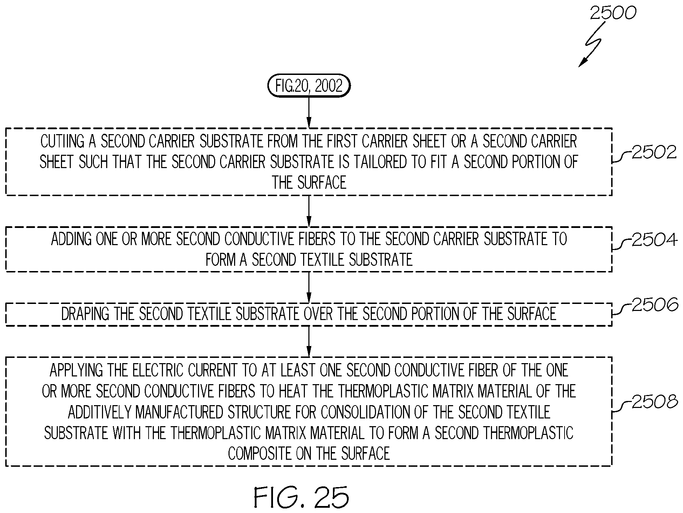

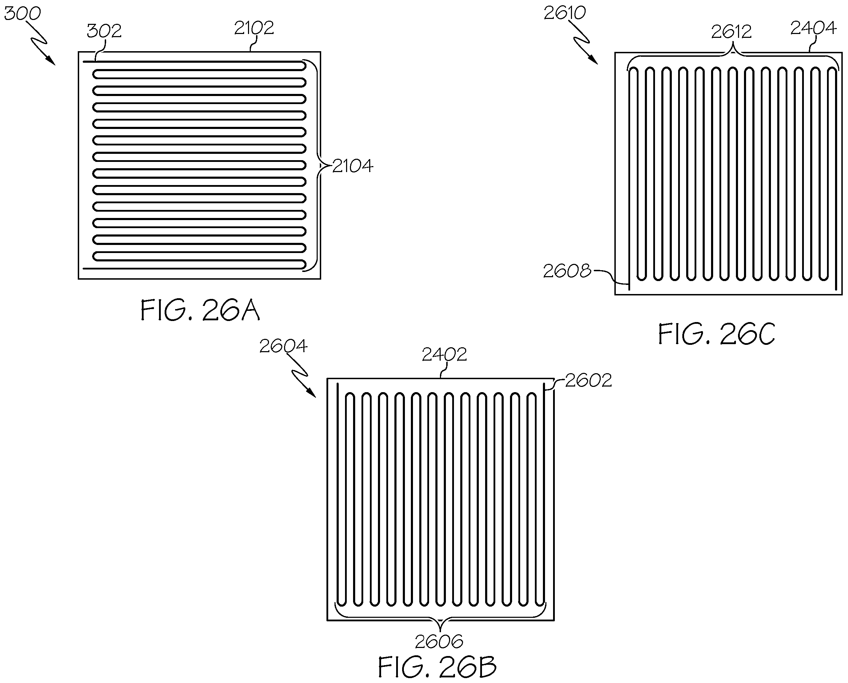

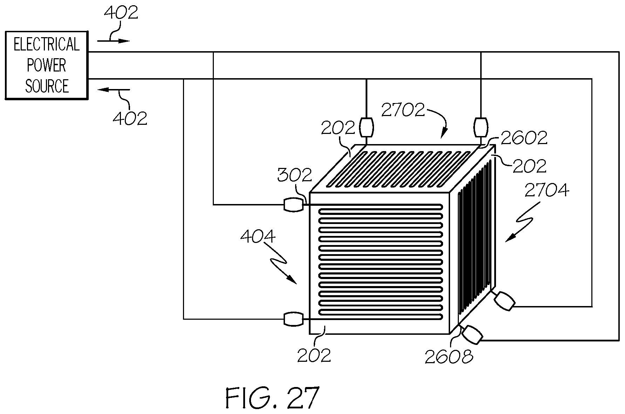

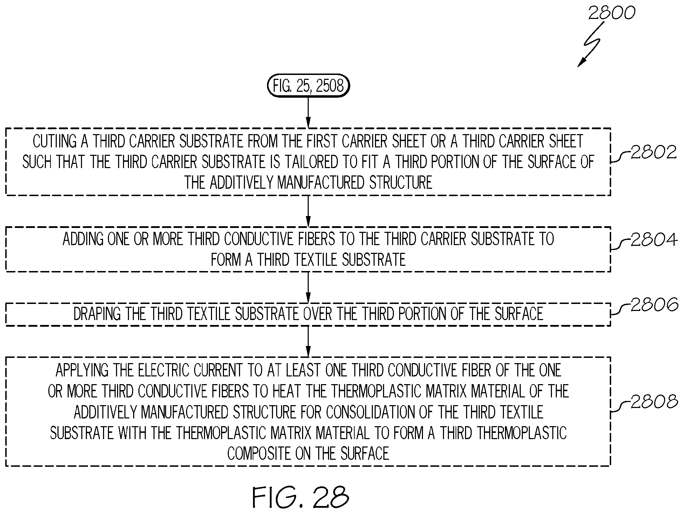

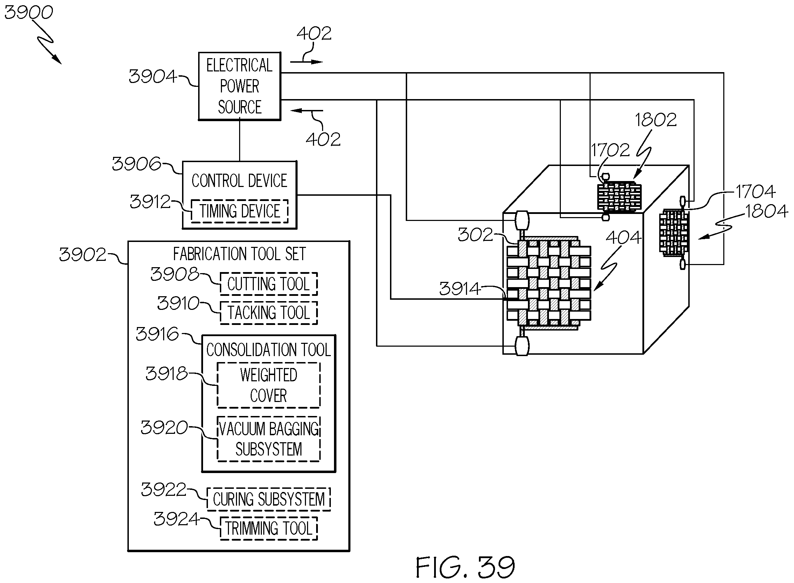

Fig. 25, in combination with Figs. 1 and 20, provides an example of the method 2500 for reinforcing an additively manufactured structure 200. Figs. 26A-C provides additional examples of first, second and third textile substrates 300, 2604, 2610. Fig. 27 shows another example of application of electric current 402 to conductive fibers 302, 2602, 2608 of first, second and third textile substrates 300, 2604, 2610 to form first, second and third thermoplastic composites 404, 2702, 2704 on portions 212, 214, 216 of the surface 210 of the additively manufactured structure 200. Fig. 28, in combination with Figs. 1, 20 and 25, provides an example of the method 2800 for reinforcing an additively manufactured structure 200. Fig. 39 provides an example of a system 3900 for reinforcing an additively manufactured structure 200.

With reference again to Figs. 1, 2A-B, 3 and 4, in one or more examples, a method 100 (see Fig. 1) for reinforcing an additively manufactured structure 200 includes draping 102 a textile substrate 300 including one or more conductive fibers 302 over at least a portion 212 of a surface 210 of the additively manufactured structure 200. The additively manufactured structure 200 includes a thermoplastic matrix material 202. At 104, an electric current 402 is applied to at least one conductive fiber 302 of the one or more conductive fibers 302 to heat the thermoplastic matrix material 202 of the additively manufactured structure 200 for consolidation of the textile substrate 300 with the thermoplastic matrix material 202 to form a thermoplastic composite 404 on the surface 210.

In another example of the method 100, the applying 104 of the electric current 402 to the at least one conductive fiber 302 on the surface 210 of the additively manufactured structure 200 forms a fiber-reinforced additively manufactured structure 406. In yet another example of the method 100, the additively manufactured structure 200 includes an outer portion 204 and at least the outer portion 204 includes the thermoplastic matrix material 202. In still another example of the method 100, the additively manufactured structure 200 includes an inner portion 206 and the inner portion 206 includes another material 208 different from the thermoplastic matrix material 202. In a further example, the another material 208 includes a polymer material, a ceramic material, a metal material or any other suitable material in any suitable combination.

In still yet another example of the method 100, the thermoplastic matrix material 202 includes an acrylic matrix material, a polycarbonate matrix material, a polyphenylene sulfide matrix material, a polypropylene matrix material, a polystyrene matrix material, a polysulphone matrix material, a polyvinylchloride matrix material or any other suitable thermoplastic matrix material in any suitable combination. In another example of the method 100, the additively manufactured structure 200 was fabricated using a three-dimensional printer. In yet another example of the method 100, the additively manufactured structure 200 was fabricated using fused deposition modelling.

In still another example of the method 100, the textile substrate 300 includes a woven fabric ply, a braided fabric ply, a knitted fabric ply, a woven film substrate, a woven mesh substrate or any other textile substrate in any suitable combination. In still yet another example of the method 100, the textile substrate 300 includes natural reinforcement fibers, synthetic reinforcement fibers, non-conductive reinforcement fibers, glass reinforcement fibers, nylon reinforcement fibers, conductive reinforcement fibers, carbon reinforcement fibers, aramid reinforcement fibers, metal reinforcement fibers, copper reinforcement fibers, aluminum reinforcement fibers or any other suitable type of reinforcement fibers in any suitable combination.

In another example of the method 100, the textile substrate 300 includes a plurality of the conductive fibers 302 arranged in a first direction 304 and a plurality of non-conductive fibers 306 arranged in a second direction 308 that crosses the first direction 304. In a further example, the plurality of the conductive fibers 302 includes carbon reinforcement fibers, aramid reinforcement fibers, metal reinforcement fibers, copper reinforcement fibers, aluminum reinforcement fibers or any other suitable type of conductive reinforcement fibers in any suitable combination. In another further example, the plurality of non-conductive fibers 306 include glass reinforcement fibers, nylon reinforcement fibers or any other suitable non-conductive reinforcement fibers in any suitable combination. In yet another example of the method 100, the textile substrate 300 includes reinforcement fibers pre-impregnated with a resin matrix material. In still another example of the method 100, the textile substrate 300 is sized to cover the surface 210 of the additively manufactured structure 200 or at least the portion 212 of the surface 210 over which the textile substrate 300 is draped.

With reference again to Figs. 1, 2, 3, 5 and 7, in one or more examples, a method 500 (see Fig. 5) for reinforcing an additively manufactured structure 200 includes the method 100 of Fig. 1. The method 500 begins at 502 where the textile substrate 300 is cut from a textile fabric sheet 700 such that the textile substrate 300 is tailored to fit the surface 210 of the additively manufactured structure 200 or at least the portion 212 of the surface 210 over which the textile substrate 300 is draped. The method 500 continues from 502 to 102 of Fig. 1.

In another example of the method 100 of Fig. 1, the one or more conductive fibers 302 are not in electrical communication with each other within the textile substrate 300. In yet another example of the method 100, one or more conductive fibers 302 include one or more carbon fibers, one or more aramid fibers, one or more metal fibers, one or more copper fibers, one or more aluminum fibers or any suitable type of conductive fibers in any suitable combination. In still another example of the method 100, at least one of the one or more conductive fibers 302 includes an insulation coating.

With reference again to Figs. 1, 2A-B, 3 and 6, in one or more examples, a method 600 (see Fig. 6) for reinforcing an additively manufactured structure 200 includes the method 100 of Fig. 1. The method 600 continues from 102 of Fig. 1 to 602 where the textile substrate 300 is tacked to the surface 210 of the additively manufactured structure 200 in conjunction with the draping 102 of the textile substrate 300. The method 600 continues from 602 to 104 of Fig. 1.

With reference again to Figs. 1, 2A-B, 8 and 9, in another example of the method 100, the draping 102 of the textile substrate 300 includes wrapping 802 (see Fig. 8) the textile substrate 300 around the surface 210 of the additively manufactured structure 200. At 804, the textile substrate 300 is tacked to the surface 210 of the additively manufactured structure 200 in conjunction with the wrapping 802. In a further example of the method 800, the draping 102 of the textile substrate 300 also includes cutting 806 off overlapping portions of the textile substrate 300 in conjunction with the wrapping 802 and tacking 804 of the textile substrate 300 to form a tailored substrate 902 that fits the surface 210.

With reference again to Figs. 1, 2A-B, 3, 4 and 10, in one or more examples, a method 1000 (see Fig. 10) for reinforcing an additively manufactured structure 200 includes the method 100 of Fig. 1. The method 1000 continues from 104 of Fig. 1 to 1002 where the electric current 402 is applied to additional conductive fibers 302 of the one or more conductive fibers 302 to further heat the thermoplastic matrix material 202 of the additively manufactured structure 200 for further consolidation of the textile substrate 300 with the thermoplastic matrix material 202 of the additively manufactured structure 200 to further form the thermoplastic composite 404 on the surface 210. At 1004, the electric current 402 is removed from the at least one conductive fiber 302 and the additional conductive fibers 302.

With reference again to Figs. 1, 2A-B, 3, 4 and 11, in one or more examples, a method 1100 (see Fig. 11) for reinforcing an additively manufactured structure 200 includes the method 100 of Fig. 1. The consolidation of the textile substrate 300 with the thermoplastic matrix material 202 is based at least in part on the electric current 402 being applied to the at least one conductive fiber 302 for a predetermined time. The method 1100 continues from 104 of Fig. 1 to 1102 to monitor a time the electric current 402 was applied to the at least one conductive fiber 302. At 1104, the electric current 402 is removed from the at least one conductive fiber 302 after the time the electric current 402 was applied exceeds the predetermined time.

With reference again to Figs. 1, 2A-B, 3, 4 and 12, in one or more examples, a method 1200 (see Fig. 12) for reinforcing an additively manufactured structure 200 includes the method 100 of Fig. 1. The consolidation of the textile substrate 300 with the thermoplastic matrix material 202 is based at least in part on the electric current 402 being applied to the at least one conductive fiber 302 for a predetermined time. The method 1200 continues from 104 of Fig. 1 to 1202 to monitor a temperature of the thermoplastic matrix material 202 proximate the at least one conductive fiber 302. At 1204, the electric current 402 is removed from the at least one conductive fiber 302 after the temperature exceeds the predetermined temperature.

With reference again to Figs. 1, 2A-B, 3, 13 and 39, in one or more examples, a method 1300 (see Fig. 13) for reinforcing an additively manufactured structure 200 includes the method 100 of Fig. 1. The consolidation of the textile substrate 300 with the thermoplastic matrix material 202 is based at least in part on applying a compressive force to the textile substrate 300. The method 1100 continues from 104 of Fig. 1 to 1302 to use a weighted cover 3918 over the textile substrate 300, a vacuum bagging subsystem 3920 or any other suitable consolidation tool in any suitable combination.

With reference again to Figs. 1, 4 and 14, in one or more examples, a method 1400 (see Fig. 14) for reinforcing an additively manufactured structure 200 includes the method 100 of Fig. 1. The method 1400 continues from 104 of Fig. 1 to 1402 where the electric current 402 is removed from the at least one conductive fiber 302.

With reference again to Figs. 1, 2A-B, 4 and 15, in one or more examples, a method 1500 (see Fig. 15) for reinforcing an additively manufactured structure 200 includes the method 100 of Fig. 1. The method 1500 continues from 104 of Fig. 1 to 1502 where the thermoplastic composite 404 on the surface 210 of the additively manufactured structure 200 is cured to form a fiber-reinforced additively manufactured structure 406. In another example of the method 1500, the curing 1502 of the thermoplastic composite 404 is performed using a local ambient curing process, a local heating process, an oven curing process, an ultraviolet light curing process, a visible light curing process, a direct electric heating process, a microwave heating process, an induction heating process, a radio frequency heating process or any other suitable curing process in any suitable combination. The method 1500 also continues from 104 of Fig. 1 to 1504 where the thermoplastic composite 404 is trimmed to remove waste materials resulting from consolidation of the textile substrate 300 with the thermoplastic matrix material 202.

With reference again to Figs. 1, 2A-B, 3, 4 and 16-18, in one or more examples, a method 1600 (see Fig. 16) for reinforcing an additively manufactured structure 200 includes the method 100 of Fig. 1. The textile substrate 300 is cut from a first textile fabric sheet 700 such that the textile substrate 300 is tailored to fit a first portion 212 of the surface 210 of the additively manufactured structure 200. The method 1600 continues from 104 of Fig. 1 to 1602 where a second textile substrate 702 including one or more second conductive fibers 1702 is cut from the first textile fabric sheet 700 or a second textile fabric sheet 700' such that the second textile substrate 702 is tailored to fit a second portion 214 of the surface 210. At 1604, the second textile substrate 702 is draped over the second portion 214 of the surface 210. At 1606, the electric current 402 is applied to at least one second conductive fiber 1702 of the one or more second conductive fibers 1702 to heat the thermoplastic matrix material 202 of the additively manufactured structure 200 for consolidation of the second textile substrate 702 with the thermoplastic matrix material 202 to form a second thermoplastic composite 1802 on the surface 210.

With reference again to Figs. 1, 2A-B, 7, 16, 18 and 19, in one or more examples, a method 1900 (see Fig. 19) for reinforcing an additively manufactured structure 200 includes the method 100 of Fig. 1 and the method 1600 of Fig. 16. The method 1900 continues from 1606 of Fig. 16 to 1902 where a third textile substrate 704 including one or more third conductive fibers 1704 is cut from the first textile fabric sheet 700 or a third textile fabric sheet 700" such that the third textile substrate 704 is tailored to fit a third portion 216 of the surface 210 of the additively manufactured structure 200. At 1904, the third textile substrate 704 is draped over the third portion 216 of the surface 210. At 1906, the electric current 402 is applied to at least one third conductive fiber 1704 of the one or more third conductive fibers 1704 to heat the thermoplastic matrix material 202 of the additively manufactured structure 200 for consolidation of the third textile substrate 704 with the thermoplastic matrix material 202 to form a third thermoplastic composite 1804 on the surface 210.

With reference again to Figs. 1, 2A-B, 3, 20 and 21, in one or more examples, a method 2000 (see Fig. 20) for reinforcing an additively manufactured structure 200 includes the method 100 of Fig. 1. The method 2000 begins at 2002 where the one or more conductive fibers 302 are added to a carrier substrate 2102 to form the textile substrate 300. The one or more conductive fibers 302 forming one or more paths 2104 distributed about the textile substrate 300. The method 2000 continues from 2002 to 102 of Fig. 1.

In another example of the method 2000, the one or more conductive fibers 302 are added to the carrier substrate 2102 using tailored fiber placement. In yet another example of the method 2000, the one or more conductive fibers 302 include carbon reinforcement fibers, aramid reinforcement fibers, metal reinforcement fibers, copper reinforcement fibers, aluminum reinforcement fibers or any other suitable conductive reinforcement fiber in any suitable combination.

In still another example of the method 2000, the carrier substrate 2102 includes a woven fabric ply, a braided fabric ply, a knitted fabric ply, a woven film substrate, a woven mesh substrate, a non-woven fabric substrate, a plastic film substrate, a laminate film substrate, a mesh screen substrate or any other suitable carrier substrate in any suitable combination. In still yet another example of the method 2000, the carrier substrate 2102 includes non-conductive reinforcement fibers, glass reinforcement fibers, nylon reinforcement fibers or any other suitable reinforcement fiber in any suitable combination. In another example of the method 2000, the carrier substrate 2102 is sized to cover the surface 210 of the additively manufactured structure 200 or at least the portion 212 of the surface 210 over which the textile substrate 300 is draped.

With reference again to Figs. 1, 2A-B, 3, 20, 22, 23 and 24, in one or more examples, a method 2200 (see Fig. 22) for reinforcing an additively manufactured structure 200 includes the method 100 of Fig. 1 and the method 2000 of Fig. 20. The method 2200 begins at 2202 where the carrier substrate 2102 is cut from a carrier sheet 2400 such that the carrier substrate 2102 is tailored to fit the surface 210 of the additively manufactured structure 200 or at least the portion 212 of the surface 210 over which the textile substrate 300 is draped. The method 2200 continues from 2202 to 2002 of Fig. 20.

In yet another example of the method 2000, the adding 2002 of the one or more conductive fibers 302 includes embroidering 2302 at least one of the one or more conductive fibers 302 to the carrier substrate 2102. In still another example of the method 2000, the adding 2002 of the one or more conductive fibers 302 includes sewing 2304 at least one of the one or more conductive fibers 302 to the carrier substrate 2102.

With reference again to Figs. 1, 2A-B, 4, 20, 21 and 24-27, in one or more examples, a method 2500 (see Fig. 25) for reinforcing an additively manufactured structure 200 includes the method 100 of Fig. 1 and the method 2000 of Fig. 20. The carrier substrate 2102 is cut from a first carrier sheet 2400 such that the carrier substrate 2102 is tailored to fit a first portion 212 of the surface 210 of the additively manufactured structure 200. The method 2500 continues from 2002 of Fig. 20 to 2502 where a second carrier substrate 2402 is cut from the first carrier sheet 2400 or a second carrier sheet 2400' such that the second carrier substrate 2402 is tailored to fit a second portion 214 of the surface 210. At 2504, one or more second conductive fibers 2602 are added to the second carrier substrate 2402 to form a second textile substrate 2604. The one or more second conductive fibers 2602 forming one or more second paths 2606 distributed about the second textile substrate 2604. At 2506, the second textile substrate 2604 is draped over the second portion 214 of the surface 210. At 2508, the electric current 402 is applied to at least one second conductive fiber 2602 of the one or more second conductive fibers 2602 to heat the thermoplastic matrix material 202 of the additively manufactured structure 200 for consolidation of the second textile substrate 2604 with the thermoplastic matrix material 202 to form a second thermoplastic composite 2702 on the surface 210.

With reference again to Figs. 1, 2A-B, 4, 20, 24 and 26-28, in one or more examples, a method 2800 (see Fig. 28) for reinforcing an additively manufactured structure 200 includes the method 100 of Fig. 1, the method 2000 of Fig. 20 and the method 2500 of Fig. 25. The method 2800 continues from 2508 of Fig. 25 to 2802 where a third carrier substrate 2404 is cut from the first carrier sheet 2400 or a third carrier sheet 2400" such that the third carrier substrate 2404 is tailored to fit a third portion 216 of the surface 210 of the additively manufactured structure 200. At 2804, one or more third conductive fibers 2608 are added to the third carrier substrate 2404 to form a third textile substrate 2610. The one or more third conductive fibers 2608 forming one or more third paths 2612 distributed about the third textile substrate 2610. At 2806, the third textile substrate 2610 is draped over the third portion 216 of the surface 210. At 2808, the electric current 402 is applied to at least one third conductive fiber 2608 of the one or more third conductive fibers 2608 to heat the thermoplastic matrix material 202 of the additively manufactured structure 200 for consolidation of the third textile substrate 2610 with the thermoplastic matrix material 202 to form a third thermoplastic composite 2704 on the surface 210.

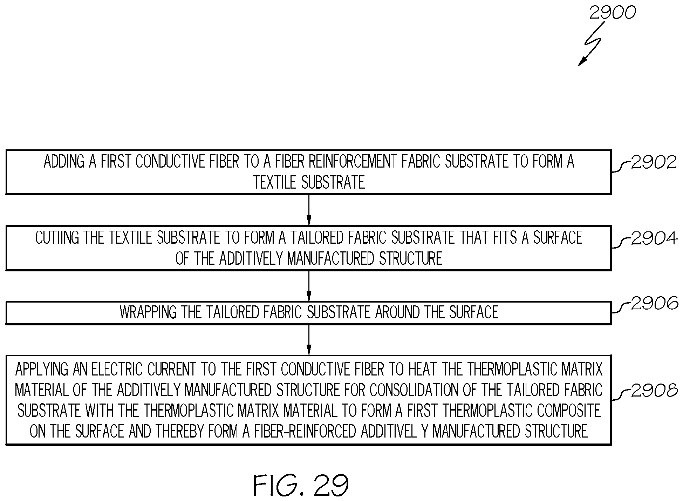

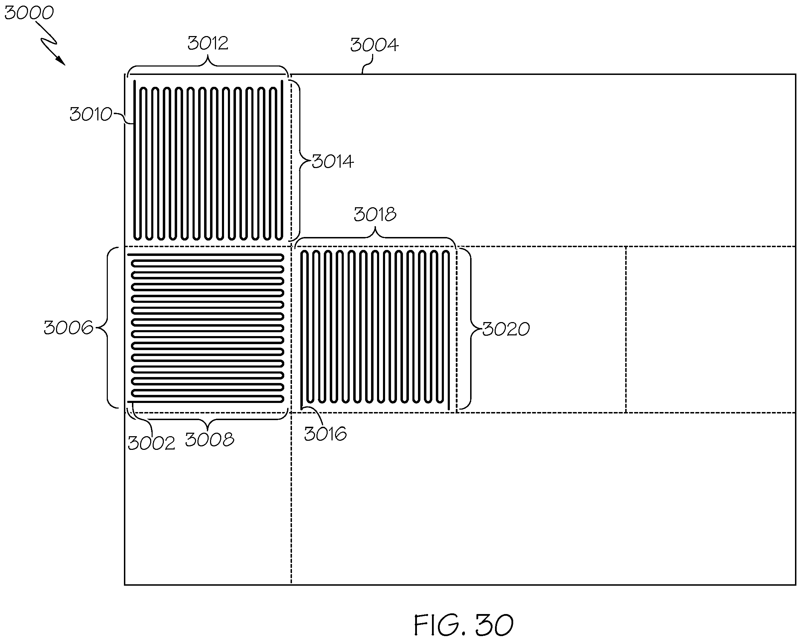

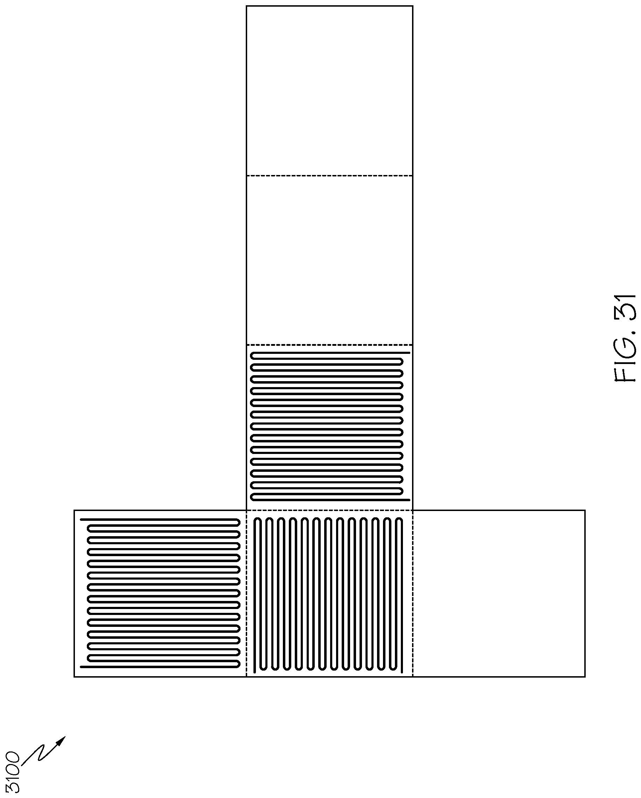

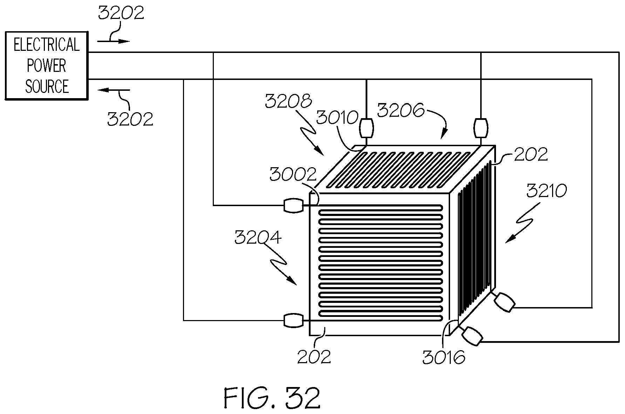

Referring generally to Figs. 2A-B and 29-38, by way of examples, the present disclosure is directed to a method 2900, 3600, 3700, 3800 for reinforcing an additively manufactured structure 200. Fig. 2A provides an example of an additively manufactured structure 200. Fig. 2B provides a cross-sectional view of the additively manufactured structure 200. Fig. 29 provides an example of the method 2900 for reinforcing an additively manufactured structure 200. Fig. 30 provides an example of a textile substrate 3000 marked for cutting a tailored fabric substrate 3100. Fig. 31 provides an example of the tailored fabric substrate 3100. Fig. 32 shows an example of the application of electric current to first, second and third conductive fibers 3002, 3010, 3016 of the tailored fabric substrate 3100 to form first, second and third thermoplastic composites 3204, 3208, 3210 on portions 212, 214, 216 of the surface 210 of the additively manufactured structure 200.

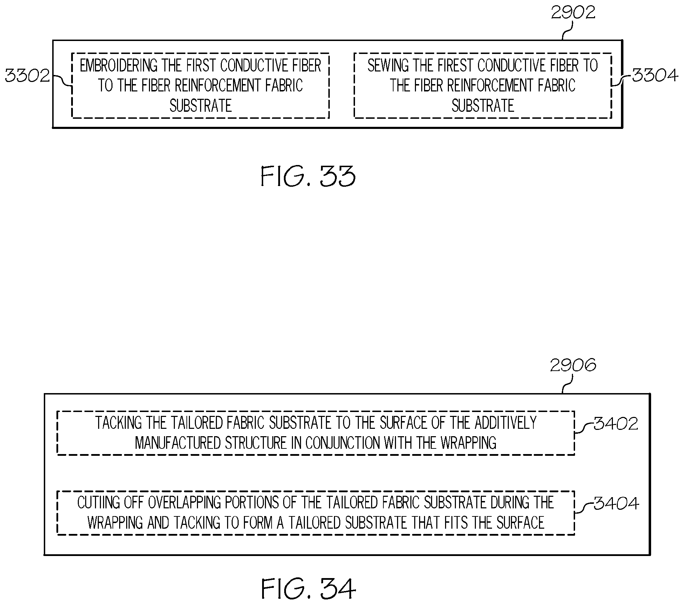

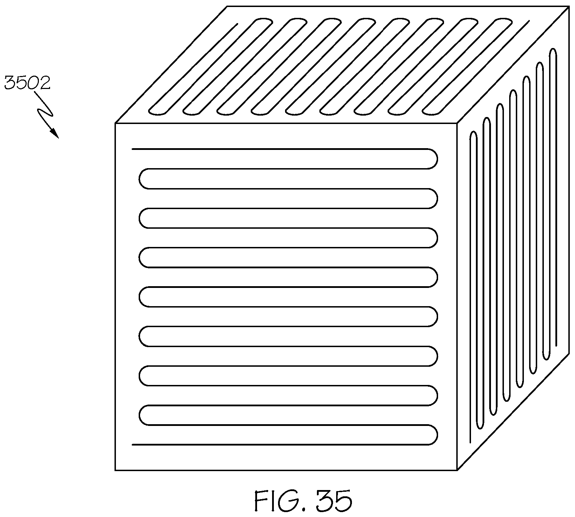

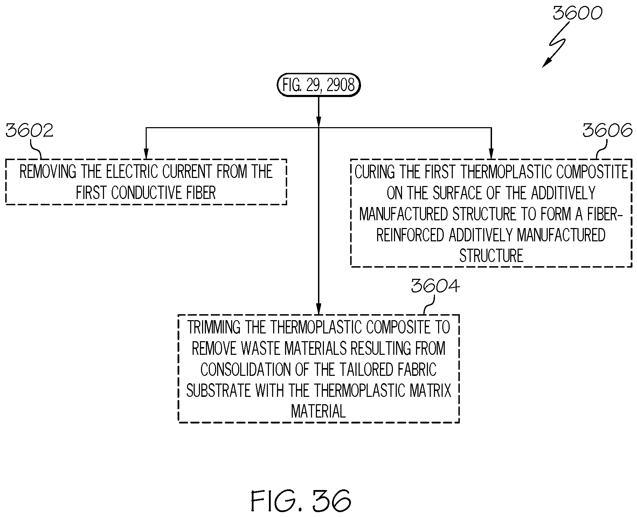

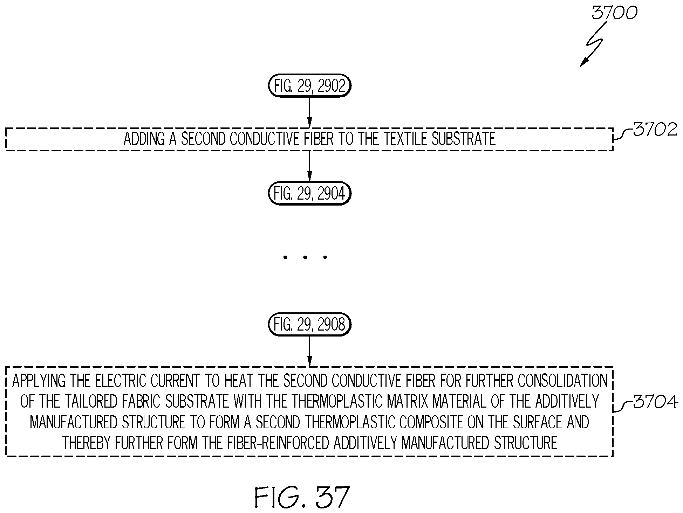

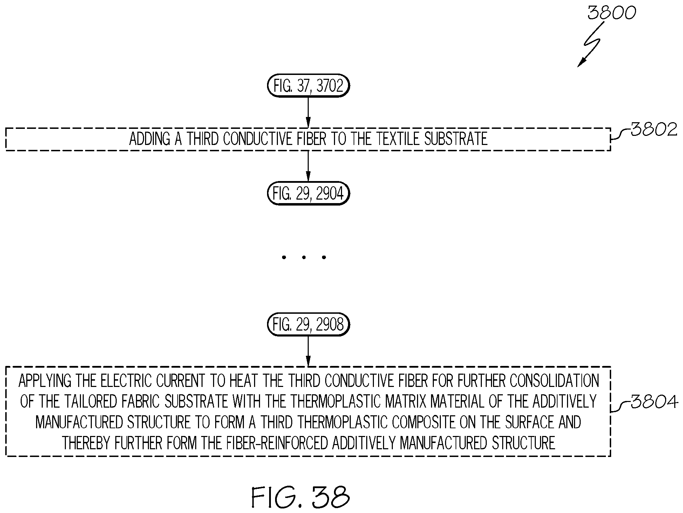

Fig. 33 provides examples of the adding 2902 of the first conductive fiber 3002 in the method 2900 for reinforcing an additively manufactured structure 200. Fig. 34 provides an example of the wrapping 2906 of the tailored fabric substrate 3100 in the method 2900 for reinforcing an additively manufactured structure 200. Fig. 35 provides an example of a tailored substrate 3502 cut to fit a portion 212, 214, 216 of the surface 210 of the additively manufactured structure 200 after tacking 3402 the tailored fabric substrate 3502 to the surface 210. Fig. 36, in combination with Fig. 29, provides an example of the method 3600 for reinforcing an additively manufactured structure 200. Fig. 37, in combination with Fig. 29, provides an example of the method 3700 for reinforcing an additively manufactured structure 200. Fig. 38, in combination with Figs. 29 and 37, provides an example of the method 3800 for reinforcing an additively manufactured structure 200.

With reference again to Figs. 2A-B and 29-35, in one or more examples, a method 2900 (see Fig. 29) for reinforcing an additively manufactured structure 200 includes adding 2902 a first conductive fiber 3002 to a fiber reinforcement fabric substrate 3004 to form a textile substrate 3000. The first conductive fiber 3002 forming a first path 3006 distributed about at least a first area 3008 of the textile substrate 3000. At 2904, the textile substrate 3000 is cut to form a tailored fabric substrate 3100 that fits a surface 210 of the additively manufactured structure 200. The additively manufactured structure 200 includes a thermoplastic matrix material 202. At 2906, the tailored fabric substrate 3100 is wrapped around the surface 210. At 2908, an electric current 3202 is applied to the first conductive fiber 3002 to heat the thermoplastic matrix material 202 of the additively manufactured structure 200 for consolidation of the tailored fabric substrate 3100 with the thermoplastic matrix material 202 to form a first thermoplastic composite 3204 on the surface 210 and thereby form a fiber-reinforced additively manufactured structure 3206.

In another example of the method 2900, the additively manufactured structure 200 includes an outer portion 204 and an inner portion 206. The outer portion 204 includes the thermoplastic matrix material 202. The inner portion 206 includes another material 208 different from the thermoplastic matrix material 202. In a further example, the another material 208 includes a polymer material, a ceramic material, a metal material or any other suitable material in any suitable combination. In yet another example of the method 2900, the thermoplastic matrix material 202 includes an acrylic matrix material, a polycarbonate matrix material, a polyphenylene sulfide matrix material, a polypropylene matrix material, a polystyrene matrix material, a polysulphone matrix material, a polyvinylchloride matrix material or any other suitable thermoplastic matrix material in any suitable combination.

In still another example of the method 2900, the additively manufactured structure 200 was fabricated using a three-dimensional printer. In still yet another example of the method 2900, the additively manufactured structure 200 was fabricated using fused deposition modelling. In another example of the method 2900, the first conductive fiber 3002 is added to the fiber reinforcement fabric substrate 3004 using tailored fiber placement.

In yet another example of the method 2900, the fiber reinforcement fabric substrate 3004 includes a woven fabric ply, a woven film substrate, a woven mesh substrate or any other suitable fiber reinforcement fabric substrate in any suitable combination. In still another example of the method 2900, the fiber reinforcement fabric substrate 3004 includes non-conductive reinforcement fibers, glass reinforcement fibers, nylon reinforcement fibers, conductive reinforcement fibers, carbon reinforcement fibers, metal reinforcement fibers, copper reinforcement fibers, aluminum reinforcement fibers or any suitable reinforcement fibers in any suitable combination. In still yet another example of the method 2900, the fiber reinforcement fabric substrate 3004 includes reinforcement fibers pre-impregnated with a resin matrix material. In another example of the method 2900, the fiber reinforcement fabric substrate 3004 is sized to cover the surface 210 of the additively manufactured structure 200.

In yet another example of the method 2900, the first conductive fiber 3002 includes a carbon fiber, an aramid fiber, a metal fiber, a copper fiber, an aluminum fiber or any other suitable conductive fiber in any suitable combination. In still another example of the method 2900, the first conductive fiber 3002 includes an insulation coating.

In still yet another example of the method 2900, the adding 2902 of the first conductive fiber 3002 includes embroidering 3302 the first conductive fiber 3002 to a fiber reinforcement fabric substrate 3004. In another example of the method 2900, the adding 2902 of the first conductive fiber 3002 includes sewing 3304 the first conductive fiber 3002 to the fiber reinforcement fabric substrate 3004.

In yet another example of the method 2900, the wrapping 2906 of the tailored fabric substrate 3100 includes tacking 3402 the tailored fabric substrate 3100 to the surface 210 of the additively manufactured structure 200 in conjunction with the wrapping 2906. In still another example of the method 2900, the wrapping 2906 of the tailored fabric substrate 3100 also includes cutting 3404 off overlapping portions of the tailored fabric substrate 3100 during the wrapping 2906 and tacking 3402 to form a tailored substrate 3502 that fits the surface 210.

With reference again to Figs. 2A-B, 29-32 and 36, in one or more examples, a method 3600 (see Fig. 36) for reinforcing an additively manufactured structure 200 includes the method 2900 of Fig. 29. The method 3600 continues from 2908 of Fig. 29 to 3602 where the electric current 3202 is removed from the first conductive fiber 3002. The method 3600 also continues from 2908 of Fig. 29 to 3604 where the first thermoplastic composite 3204 is trimmed to remove waste materials resulting from consolidation of the tailored fabric substrate 3100 with the thermoplastic matrix material 202. Additionally, the method 3600 continues from 2908 of Fig. 29 to 3606 where the first thermoplastic composite 3204 on the surface 210 of the additively manufactured structure 200 is cured to form the fiber-reinforced additively manufactured structure 3206. In a further example, the curing 3606 of the first thermoplastic composite 3204 is performed using a local ambient curing process, a local heating process, an oven curing process, an ultraviolet light curing process, a visible light curing process, a direct electric heating process, a microwave heating process, an induction heating process, a radio frequency heating process or any other suitable curing process in any suitable combination.

With reference again to Figs. 2A-B, 29-32 and 37, in one or more examples, a method 3700 (see Fig. 37) for reinforcing an additively manufactured structure 200 includes the method 2900 of Fig. 29. The method 3700 continues from 2902 of Fig. 29 to 3702 where a second conductive fiber 3010 is added to the textile substrate 3000. The second conductive fiber 3010 forming a second path 3012 distributed about a second area 3014 of the textile substrate 3000. After 3702, the method 3700 continues to 2904 of Fig. 29. Additionally, the method 3700 continues from 2908 of Fig. 29 to 3704 where the electric current 3202 is applied to heat the second conductive fiber 3010 for further consolidation of the tailored fabric substrate 3100 with the thermoplastic matrix material 202 of the additively manufactured structure 200 to form a second thermoplastic composite 3208 on the surface 210 and thereby further form the fiber-reinforced additively manufactured structure 3206.

With reference again to Figs. 2A-B, 29-32, 37 and 38, in one or more examples, a method 3800 (see Fig. 38) for reinforcing an additively manufactured structure 200 includes the method 2900 of Fig. 29 and the method 3700 of Fig. 37. The method 3800 continues from 3702 of Fig. 37 to 3802 where a third conductive fiber 3016 is added to the textile substrate 3000. The third conductive fiber 3016 forming a third path 3018 distributed about a third area 3020 of the textile substrate 3000. After 3802, the method 3800 continues to 2904 of Fig. 29. Additionally, the method 3800 continues from 2908 of Fig. 29 to 3804 where the electric current 3202 is applied to heat the third conductive fiber 3016 for further consolidation of the tailored fabric substrate 3100 with the thermoplastic matrix material 202 of the additively manufactured structure 200 to form a third thermoplastic composite 3210 on the surface 210 and thereby further form the fiber-reinforced additively manufactured structure 3206.

Referring generally to Figs. 1, 2A-B, 3, 4, 17A-C, 18, 21, 24, 26, 27, 30, 39 and 40, by way of examples, the present disclosure is directed to a system 3900, 4000 for reinforcing an additively manufactured structure 200. Fig. 1 provides an example of a method 100 for reinforcing an additively manufactured structure 200. Fig. 2A provides an example of an additively manufactured structure 200. Fig. 2B provides a cross-sectional view of the additively manufactured structure 200. Fig. 3 provides an example of a textile substrate 300. Fig. 4 shows an example of the application of electric current 402 to conductive fibers 302 of the textile substrate 300 to form a thermoplastic composite 404 on a portion 212 of the surface 210 of the additively manufactured structure 200. Figs. 17A-C provides examples of first, second and third textile substrates 300, 702, 704. Fig. 18 shows an example of the application of electric current 402 to conductive fibers 302, 1702, 1704 of first, second and third textile substrates 300, 702, 704 to form first, second and third thermoplastic composites 404, 1802, 1804 on portions 212, 214, 216 of the surface 210 of the additively manufactured structure 200.

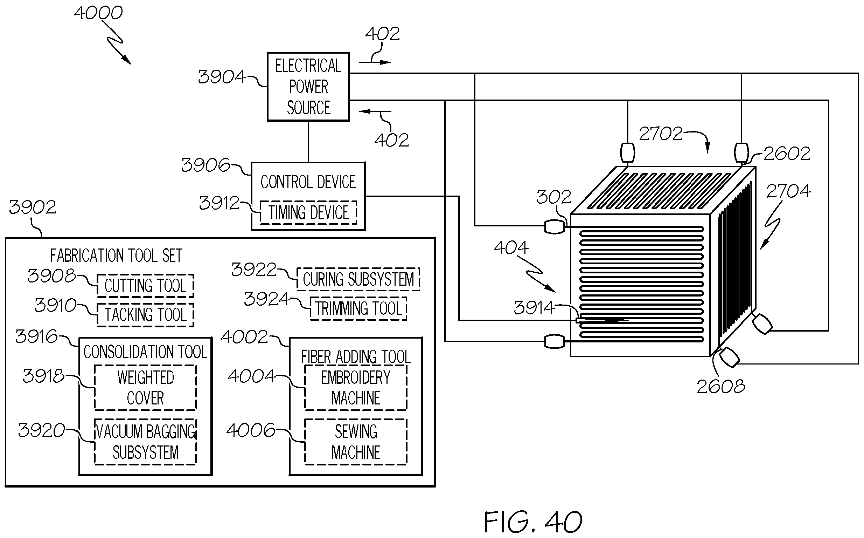

Fig. 21 provides another example of a textile substrate 300. Fig. 24 provides an example of a carrier sheet 2400 marked for cutting one or more carrier substrates 2102, 2402, 2404. Figs. 26A-C provides additional examples of first, second and third textile substrates 300, 2604, 2610. Fig. 27 shows another example of application of electric current 402 to conductive fibers 302, 2602, 2608 of first, second and third textile substrates 300, 2604, 2610 to form first, second and third thermoplastic composites 404, 2702, 2704 on portions 212, 214, 216 of the surface 210 of the additively manufactured structure 200. Fig. 39 provides an example of the system 3900 for reinforcing an additively manufactured structure 200. Fig. 40 provides an example of the system 4000 for reinforcing an additively manufactured structure 200.

With reference again to Figs. 1, 2A-B, 3, 4, 7, 9, 17, 18, 30 and 39, in one or more examples, a system 3900 (see Fig. 39) for reinforcing an additively manufactured structure 200 includes a fabrication tool set 3902, an electrical power source 3904 and a control device 3906. The control device 3906 in operative communication with the electrical power source 3904 to selectively apply and remove electric current 402 from one or more conductive fibers 302 of a textile substrate 300. The textile substrate 300 is configured for draping over at least a portion 212 of a surface 210 of the additively manufactured structure 200. The additively manufactured structure 200 includes a thermoplastic matrix material 202. The control device 3906 and the electrical power source 3904 are configured to apply the electric current 402 to at least one conductive fiber 302 of the one or more conductive fibers 302 to heat the thermoplastic matrix material 202 of the additively manufactured structure 200 for consolidation of the textile substrate 300 with the thermoplastic matrix material 202 to form a thermoplastic composite 404 on the surface 210.

In another example of the system 3900, the additively manufactured structure 200 was fabricated using a three-dimensional printer. In yet another example of the system 3900, the additively manufactured structure 200 was fabricated using fused deposition modelling. In still another example of the system 3900, the textile substrate 300 is sized to cover the surface 210 of the additively manufactured structure 200 or at least the portion 212 of the surface 210 of the additively manufactured structure 200.

In still yet another example of the system 3900, the fabrication tool set 3902 includes a cutting tool 3908 configured to cut the fiber reinforcement fabric substrate 3004 from a fiber reinforcement fabric sheet 900 such that the fiber reinforcement fabric substrate 3004 is tailored to fit the surface 210 of the additively manufactured structure 200 or at least the portion 212 of the surface 210 of the additively manufactured structure 200 over which the textile substrate 300 is draped. In another example of the system 3900, the fabrication tool set 3902 includes a tacking tool 3910 configured to tack the textile substrate 300 to the surface 210 of the additively manufactured structure 200 in conjunction with the draping 102 of the of the textile substrate 300.

In yet another example of the system 3900, the textile substrate 300 is configured for being wrapped around the surface 210 of the additively manufactured structure 200. In this example, the fabrication tool set 3902 includes a tacking tool 3910 configured to tack the textile substrate 300 to the surface 210 in conjunction with the wrapping of the textile substrate 300. In a further example, the fabrication tool set 3902 also includes a cutting tool 3908 configured to cut off overlapping portions of the textile substrate 300 in conjunction with the wrapping 802 and tacking 804 of the textile substrate 300 to form a tailored substrate 902 that fits the surface 210.

In still another example of the system 3900, the control device 3906 and the electrical power source 3904 are configured to apply the electric current 402 to additional conductive fibers 302 of the one or more conductive fibers 302 to further heat the thermoplastic matrix material 202 of the additively manufactured structure 200 for further consolidation of the textile substrate 300 with the thermoplastic matrix material 202 of the additively manufactured structure 200 to further form the thermoplastic composite 404. In a further example, the control device 3906 and the electrical power source 3904 are configured to remove the electric current 402 from the additional conductive fibers 302.

In still yet another example of the system 3900, the consolidation of the textile substrate 300 with the thermoplastic matrix material 202 is based at least in part on the electric current 402 being applied to the at least one conductive fiber 302 for a predetermined time. In this example, the control device 3906 includes a timing device 3912 configured to monitor a time the electric current 402 was applied to the at least one conductive fiber 302. The control device 3906 and the electrical power source 3904 are configured to remove the electric current 402 from the at least one conductive fiber 302 after the timing device 3912 indicates the time the electric current 402 was applied exceeds the predetermined time.

In another example of the system 3900, the consolidation of the textile substrate 300 with the thermoplastic matrix material 202 is based at least in part on the thermoplastic matrix material 202 being heated to a predetermined temperature. In this example, the system also includes a temperature sensor 3914 in operative communication with the control device 3906 and disposed on the additively manufactured structure 200 proximate the at least one conductive fiber 302. The temperature sensor 3914 is configured to monitor a temperature of the thermoplastic matrix material 202 proximate the at least one conductive fiber 302. The control device 3906 and the electrical power source 3904 are configured to remove the electric current 402 from the at least one conductive fiber 302 after the temperature sensor 3914 indicates the temperature exceeds the predetermined temperature.

In yet another example of the system 3900, the consolidation of the textile substrate 300 with the thermoplastic matrix material 202 is based at least in part on applying a compressive force to the textile substrate 300. In this example, the fabrication tool set 3902 includes a consolidation tool 3916 configured to apply a compressive force to the textile substrate 300 for consolidation of the textile substrate 300 with the thermoplastic matrix material 202. In a further example, the consolidation tool 3916 includes a weighted cover 3918, a vacuum bagging subsystem 3920 or any other suitable consolidation tool in any suitable combination.

In still another example of the system 3900, the control device 3906 and the electrical power source 3904 are configured to remove the electric current 402 from the at least one conductive fiber 302.

In still yet another example of the system 3900, the fabrication tool set 3902 includes a curing subsystem 3922 configured to cure the thermoplastic composite 404 on the surface 210 of the additively manufactured structure 200 to form a fiber-reinforced additively manufactured structure 406. In a further example, the curing subsystem 3018 includes a local heating device, an oven curing device, an ultraviolet light curing device, a visible light curing device, a direct electric heating device, a microwave heating device, an induction heating device, a radio frequency heating device or any other suitable curing subsystem in any suitable combination. In another example of the system 3900, the fabrication tool set 3902 includes a trimming tool 3924 configured to trim the thermoplastic composite 404 to remove waste materials.

In yet another example of the system 3900, the fabrication tool set 3902 includes a cutting tool 3908 configured to cut the textile substrate 300 from a first textile fabric sheet 700 such that the textile substrate 300 is tailored to fit a first portion 212 of the surface 210 of the additively manufactured structure 200. The cutting tool 3908 is configured to cut a second textile substrate 702 from the first textile fabric sheet 700 or a second textile fabric sheet 700' such that the second textile substrate 702 is tailored to fit a second portion 214 of the surface 210. The second textile substrate 702 is configured for draping over the second portion 214 of the surface 210. The control device 3906 and the electrical power source 3904 are configured to apply the electric current 402 to at least one second conductive fiber 1702 of the one or more second conductive fibers 1702 to heat the thermoplastic matrix material 202 of the additively manufactured structure 200 for consolidation of the second textile substrate 702 with the thermoplastic matrix material 202 to form a second thermoplastic composite 1802 on the surface 210.

In a further example, the cutting tool 3908 is configured to cut a third textile substrate 704 from the first textile fabric sheet 700 or a third textile fabric sheet 700" such that the third textile substrate 704 is tailored to fit a third portion 216 of the surface 210. The third textile substrate 704 is configured for draping over the third portion 216 of the surface 210. The control device 3906 and the electrical power source 3904 are configured to apply the electric current 402 to at least one third conductive fiber 1704 of the one or more third conductive fibers 1704 to heat the thermoplastic matrix material 202 of the additively manufactured structure 200 for consolidation of the third textile substrate 704 with the thermoplastic matrix material 202 to form a third thermoplastic composite 1804 on the surface 210.

With reference again to Figs. 2A-B, 3, 21, 24, 26, 27, 39 and 40, in one or more examples, a system 4000 (see Fig. 40) for reinforcing an additively manufactured structure 200 includes the system 3900 of Fig. 39. In the system 4000, the fabrication tool set 3902 includes a fiber adding tool 4002 configured to add the one or more conductive fibers 302 to a carrier substrate 2102 to form the textile substrate 300. The one or more conductive fibers 302 forming one or more paths 2104 distributed about the textile substrate 300.

In another example of the system 4000, the one or more conductive fibers 302 are added to the carrier substrate 2102 using tailored fiber placement. In yet another example of the system 4000, the carrier substrate 2102 is sized to cover the surface 210 of the additively manufactured structure 200 or at least the portion 212 of the surface 210 over which the textile substrate 300 is draped.

In still another example of the system 4000, the fiber adding tool 4002 includes an embroidery machine 4004 configured to embroider at least one of the one or more conductive fibers 302 to the carrier substrate 2102. In still yet another example of the system 4000, the fiber adding tool 4002 includes a sewing machine 4006 configured to sew at least one of the one or more conductive fibers 302 to the carrier substrate 2102.

In another example of the system 4000, the fabrication tool set 3902 also includes a cutting tool 3908 configured to cut the carrier substrate 2102 from a carrier sheet 2400 such that the carrier substrate 2102 is tailored to fit the surface 210 of the additively manufactured structure 200 or at least the portion 212 of the surface 210 over which the textile substrate 300 is draped.

In a further example, the cutting tool 3908 is configured to cut the carrier substrate 2102 from a first carrier sheet 2400 such that the carrier substrate 2102 is tailored to fit a first portion 212 of the surface 210 of the additively manufactured structure 200. The cutting tool 3908 is configured to cut a second carrier substrate 2402 from the first carrier sheet 2400 or a second carrier sheet 2400' such that the second carrier substrate 2402 is tailored to fit a second portion 214 of the surface 210. The fiber adding tool 4002 is configured to add one or more second conductive fibers 2602 to the second carrier substrate 2402 to form a second textile substrate 2604. The one or more second conductive fibers 2602 forming one or more second paths 2606 distributed about the second textile substrate 2604. The second textile substrate 2604 is configured for draping over the second portion 214 of the surface 210. The control device 3906 and the electrical power source 3904 are configured to apply the electric current 402 to at least one second conductive fiber 2602 of the one or more second conductive fibers 2602 to heat the thermoplastic matrix material 202 of the additively manufactured structure 200 for consolidation of the second textile substrate 2604 with the thermoplastic matrix material 202 to form a second thermoplastic composite 2702 on the surface 210.

In another further example, the cutting tool 3908 is configured to cut a third carrier substrate 2404 from the first carrier sheet 2400 or a third carrier sheet 2400" such that the third carrier substrate 2404 is tailored to fit a third portion 216 of the surface 210 of the additively manufactured structure 200. The fiber adding tool 4002 is configured to add one or more third conductive fibers 2608 to the third carrier substrate 2404 to form a third textile substrate 2610. The one or more third conductive fibers 2608 forming one or more third paths 2612 distributed about the third textile substrate 2610. The third textile substrate 2610 is configured for draping over the third portion 216 of the surface 210. The control device 3906 and the electrical power source 3904 are configured to apply the electric current 402 to at least one third conductive fiber 2608 of the one or more third conductive fibers 2608 to heat the thermoplastic matrix material 202 of the additively manufactured structure 200 for consolidation of the third textile substrate 2610 with the thermoplastic matrix material 202 to form a third thermoplastic composite 2704 on the surface 210.

Examples of the methods 100, 500, 600, 1000, 1100, 1200, 1300, 1400, 1500, 1600, 1900, 2000, 2200, 2500, 2800, 2900, 3600, 3700, 3800 and systems 3900, 4000 for reinforcing additively manufactured structures 200 may be related to or used in the context of aircraft manufacturing. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may be implemented to produce components and other equipment in various types of vehicles and in the construction of various types of buildings.

The preceding detailed description refers to the accompanying drawings, which illustrate specific examples described by the present disclosure. Other examples having different structures and operations do not depart from the scope of the present disclosure. Like reference numerals may refer to the same feature, element or component in the different drawings. Throughout the present disclosure, any one of a plurality of items may be referred to individually as the item and a plurality of items may be referred to collectively as the items and may be referred to with like reference numerals. Moreover, as used herein, a feature, element, component or step preceded with the word "a" or "an" should be understood as not excluding a plurality of features, elements, components or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic and/or operational step described in connection with the example is included in at least one aspect, embodiment and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component or hardware "configured to" perform a specified function is indeed capable of performing the specified function without any alteration, rather than merely having potential to perform the specified function after further modification. In other words, the system, apparatus, device, structure, article, element, component or hardware "configured to" perform a specified function is specifically selected, created, implemented, utilized, programmed and/or designed for the purpose of performing the specified function. As used herein, "configured to" denotes existing characteristics of a system, apparatus, structure, article, element, component or hardware that enable the system, apparatus, structure, article, element, component or hardware to perform the specified function without further modification. For purposes of this disclosure, a system, apparatus, device, structure, article, element, component or hardware described as being "configured to" perform a particular function may additionally or alternatively be described as being "adapted to" and/or as being "operative to" perform that function.

Unless otherwise indicated, the terms "first," "second," "third," etc. are used herein merely as labels and are not intended to impose ordinal, positional or hierarchical requirements on the items to which these terms refer. Moreover, reference to, e.g., a "second" item does not require or preclude the existence of, e.g., a "first" or lower-numbered item and/or, e.g., a "third" or higher-numbered item.

As used herein, the phrase "at least one of," when used with a list of items, means different combinations of one or more of the listed items may be used and only one of each item in the list may be needed. For example, "at least one of item A, item B and item C" may include, without limitation, item A or item A and item B. This example also may include item A, item B and item C or item B and item C. In other examples, "at least one of' may be, for example, without limitation, two of item A, one of item B and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. 1, 5, 6, 8, 10-16, 19, 20, 22, 23, 25, 28, 29, 33, 34, and 36-38, referred to above, the blocks may represent operations, steps and/or portions thereof and lines connecting the various blocks do not imply any particular order or dependency of the operations or portions thereof. It will be understood that not all dependencies among the various disclosed operations are necessarily represented. Figs. 1, 5, 6, 8, 10-16, 19, 20, 22, 23, 25, 28, 29, 33, 34, and 36-38 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

In Figs. 2A-B, 3, 4, 7, 9, 17A-C, 18, 21, 24, 26A-C, 27, 30-32, 35, 39 and 40, referred to above, may represent functional elements, features or components thereof and do not necessarily imply any particular structure. Accordingly, modifications, additions and/or omissions may be made to the illustrated structure. Additionally, those skilled in the art will appreciate that not all elements, features and/or components described and illustrated in Figs. 2A-B, 3, 4, 7, 9, 17A-C, 18, 21, 24, 26A-C, 27, 30-32, 35, 39 and 40, referred to above, need be included in every example and not all elements, features and/or components described herein are necessarily depicted in each illustrative example. Accordingly, some of the elements, features and/or components described and illustrated in Figs. 2A-B, 3, 4, 7, 9, 17A-C, 18, 21, 24, 26A-C, 27, 30-32, 35, 39 and 40 may be combined in various ways without the need to include other features described and illustrated in Figs. 2A-B, 3, 4, 7, 9, 17A-C, 18, 21, 24, 26A-C, 27, 30-32, 35, 39 and 40, other drawing figures and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 2A-B, 3, 4, 7, 9, 17A-C, 18, 21, 24, 26A-C, 27, 30-32, 35, 39 and 40, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features and/or components that serve a similar, or at least substantially similar, purpose are labeled with like numbers in each of Figs. 2A-B, 3, 4, 7, 9, 17A-C, 18, 21, 24, 26A-C, 27, 30-32, 35, 39 and 40 and such elements, features and/or components may not be discussed in detail herein with reference to each of Figs. 2A-B, 3, 4, 7, 9, 17A-C, 18, 21, 24, 26A-C, 27, 30-32, 35, 39 and 40. Similarly, all elements, features and/or components may not be labeled in each of Figs. 2A-B, 3, 4, 7, 9, 17A-C, 18, 21, 24, 26A-C, 27, 30-32, 35, 39 and 40, but reference numerals associated therewith may be utilized herein for consistency.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage or characteristic described in connection with an example is included in at least one example. Thus, discussion of features, advantages and similar language used throughout the present disclosure may, but does not necessarily, refer to the same example.

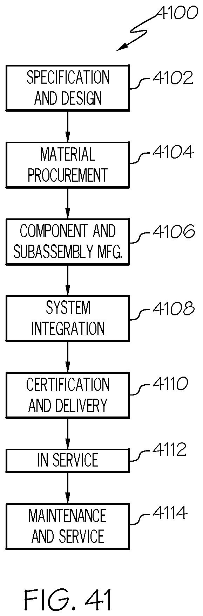

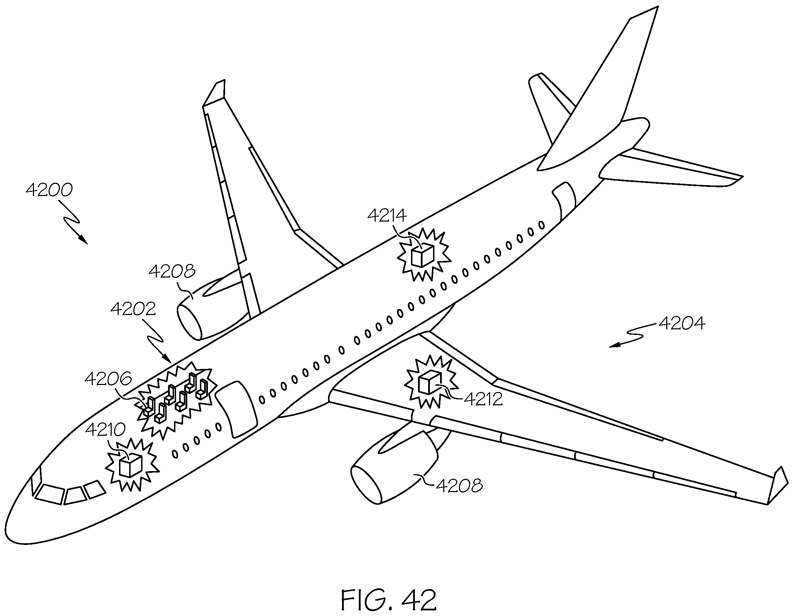

Examples of the subject matter disclosed herein may be described in the context of aircraft manufacturing and service method 4100 as shown in Fig. 41 and aircraft 4200 as shown in Fig. 42. In one or more examples, the disclosed methods and systems for associating test data for a part under test with an end item coordinate system may be used in aircraft manufacturing. During pre-production, the service method 4100 may include specification and design (block 4102) of aircraft 4200 and material procurement (block 4104). During production, component and subassembly manufacturing (block 4106) and system integration (block 4108) of aircraft 4200 may take place. Thereafter, aircraft 4200 may go through certification and delivery (block 1410) to be placed in service (block 4112). While in service, aircraft 4200 may be scheduled for routine maintenance and service (block 4114). Routine maintenance and service may include modification, reconfiguration, refurbishment, etc. of one or more systems of aircraft 4200.

Each of the processes of the service method 4100 may be performed or carried out by a system integrator, a third party and/or an operator (e.g., a customer). For the purposes of this description, a system integrator may include, without limitation, any number of aircraft manufacturers and major-system subcontractors; a third party may include, without limitation, any number of vendors, subcontractors and suppliers; and an operator may be an airline, leasing company, military entity, service organization and so on.

As shown in Fig. 42, aircraft 4200 produced by the service method 4100 may include airframe 4202 with a plurality of high-level systems 4204 and interior 4206. Examples of high-level systems 4204 include one or more of propulsion system 4208, electrical system 4210, hydraulic system 4212 and environmental system 4214. Any number of other systems may be included. Although an aerospace example is shown, the principles disclosed herein may be applied to other industries, such as the automotive industry. Accordingly, in addition to aircraft 4200, the principles disclosed herein may apply to other vehicles, e.g., land vehicles, marine vehicles, space vehicles, etc.

Further, the current disclosure comprises embodiments according to the following clauses:
Clause 1. A method for reinforcing an additively manufactured structure, the method comprising:
   draping a textile substrate comprising one or more conductive fibers over at least a portion of a surface of the additively manufactured structure, the additively manufactured structure comprising a thermoplastic matrix material; and
   applying an electric current to at least one conductive fiber of the one or more conductive fibers to heat the thermoplastic matrix material of the additively manufactured structure for consolidation of the textile substrate with the thermoplastic matrix material to form a thermoplastic composite on the surface.
Clause 2. The method of Clause 1 wherein the applying of the electric current to the at least one conductive fiber on the surface of the additively manufactured structure forms a fiber-reinforced additively manufactured structure.
Clause 3. The method of Clause 1 or 2, wherein the additively manufactured structure comprises an outer portion and at least the outer portion comprises the thermoplastic matrix material.
Clause 4. The method of any of Clauses 1 to 3, wherein the additively manufactured structure comprises an inner portion and the inner portion comprises another material different from the thermoplastic matrix material.
Clause 5. The method of Clause 4, wherein the another material comprises at least one of a polymer material, a ceramic material and a metal material.
Clause 6. The method of any of Clauses 1 to 5, wherein the thermoplastic matrix material comprises at least one of an acrylic matrix material, a polycarbonate matrix material, a polyphenylene sulfide matrix material, a polypropylene matrix material, a polystyrene matrix material, a polysulphone matrix material and a polyvinylchloride matrix material.
Clause 7. The method of any of Clauses 1 to 6, wherein the additively manufactured structure was fabricated using a three-dimensional printer.
Clause 8. The method of any of Clauses 1 to 7, wherein the additively manufactured structure was fabricated using fused deposition modelling.
Clause 9. The method of any of Clauses 1 to 8, wherein the textile substrate comprises at least one of a woven fabric ply, a braided fabric ply, a knitted fabric ply, a woven film substrate and a woven mesh substrate.
Clause 10. The method of any of Clauses 1 to 9, wherein the textile substrate comprises at least one of natural reinforcement fibers, synthetic reinforcement fibers, non-conductive reinforcement fibers, glass reinforcement fibers, nylon reinforcement fibers, conductive reinforcement fibers, carbon reinforcement fibers, aramid reinforcement fibers, metal reinforcement fibers, copper reinforcement fibers and aluminum reinforcement fibers.
Clause 11. The method of any of Clauses 1 to 10, wherein the textile substrate comprises a plurality of the conductive fibers arranged in a first direction and a plurality of non-conductive fibers arranged in a second direction that crosses the first direction.
Clause 12. The method of Clause 11, wherein the plurality of the conductive fibers comprise at least one of carbon reinforcement fibers, aramid reinforcement fibers, metal reinforcement fibers, copper reinforcement fibers and aluminum reinforcement fibers.
Clause 13. The method of Clause 11 or 12, wherein the plurality of non-conductive fibers comprise at least one of glass reinforcement fibers and nylon reinforcement fibers.
Clause 14. The method of any of Clauses 1 to 13, wherein the textile substrate comprises reinforcement fibers pre-impregnated with a resin matrix material.
Clause 15. The method of any of Clauses 1 to 14, wherein the textile substrate is sized to cover the surface of the additively manufactured structure or at least the portion of the surface over which the textile substrate is draped.
Clause 16. The method of any of Clauses 1 to 15, further comprising:
   cutting the textile substrate from a textile fabric sheet such that the textile substrate is tailored to fit the surface of the additively manufactured structure or at least the portion of the surface over which the textile substrate is draped.
Clause 17. The method of any of Clauses 1 to 16, wherein the one or more conductive fibers are not in electrical communication with each other within the textile substrate.
Clause 18. The method of any of Clauses 1 to 17, wherein the one or more conductive fibers comprise at least one of one or more carbon fibers, one or more aramid fibers, one or more metal fibers, one or more copper fibers and one or more aluminum fibers.
Clause 19. The method of any of Clauses 1 to 18, wherein at least one of the one or more conductive fibers comprises an insulation coating.
Clause 20. The method of any of Clauses 1 to 19, further comprising:
   tacking the textile substrate to the surface of the additively manufactured structure in conjunction with the draping of the textile substrate.
Clause 21. The method of any of Clauses 1 to 20, the draping of the textile substrate comprising:
   wrapping the textile substrate around the surface of the additively manufactured structure; and
   tacking the textile substrate to the surface of the additively manufactured structure in conjunction with the wrapping.
Clause 22. The method of Clause 21, the draping of the textile substrate further comprising:
   cutting off overlapping portions of the textile substrate in conjunction with the wrapping and tacking of the textile substrate to form a tailored substrate that fits the surface.
Clause 23. The method of any of Clauses 1 to 22, further comprising:
   applying the electric current to additional conductive fibers of the one or more conductive fibers to further heat the thermoplastic matrix material of the additively manufactured structure for further consolidation of the textile substrate with the thermoplastic matrix material of the additively manufactured structure to further form the thermoplastic composite on the surface. Clause 24. The method of Clause 23, further comprising:
   removing the electric current from the at least one conductive fiber and the additional conductive fibers.
Clause 25. The method of any of Clauses 1 to 24, wherein the consolidation of the textile substrate with the thermoplastic matrix material is based at least in part on the electric current being applied to the at least one conductive fiber for a predetermined time, the method further comprising:
   monitoring a time the electric current was applied to the at least one conductive fiber; and
   removing the electric current from the at least one conductive fiber after the time the electric current was applied exceeds the predetermined time.
Clause 26. The method of any of Clauses 1 to 25, wherein the consolidation of the textile substrate with the thermoplastic matrix material is based at least in part on the thermoplastic matrix material being heated to a predetermined temperature, the method further comprising:
   monitoring a temperature of the thermoplastic matrix material proximate the at least one conductive fiber; and
   removing the electric current from the at least one conductive fiber after the temperature exceeds the predetermined temperature.
Clause 27. The method of any of Clauses 1 to 26, wherein the consolidation of the textile substrate with the thermoplastic matrix material is based at least in part on applying a compressive force to the textile substrate, the method further comprising:
   using at least one of a weighted cover over the textile substrate and a vacuum bagging subsystem.
Clause 28. The method of any of Clauses 1 to 27, further comprising:
   removing the electric current from the at least one conductive fiber.
Clause 29. The method of any of Clauses 1 to 28, further comprising:
   curing the thermoplastic composite on the surface of the additively manufactured structure to form a fiber-reinforced additively manufactured structure.
Clause 30. The method of Clause 29, wherein the curing of the thermoplastic composite is performed using at least one of a local ambient curing process, a local heating process, an oven curing process, an ultraviolet light curing process, a visible light curing process, a direct electric heating process, a microwave heating process, an induction heating process and a radio frequency heating process.
Clause 31. The method of any of Clauses 1 to 30, further comprising:
   trimming the thermoplastic composite to remove waste materials resulting from consolidation of the textile substrate with the thermoplastic matrix material.
Clause 32. The method of any of Clauses 1 to 31, wherein the textile substrate is cut from a first textile fabric sheet such that the textile substrate is tailored to fit a first portion of the surface of the additively manufactured structure, the method further comprising:
   cutting a second textile substrate comprising one or more second conductive fibers from the first textile fabric sheet or a second textile fabric sheet such that the second textile substrate is tailored to fit a second portion of the surface;
   draping the second textile substrate over the second portion of the surface; and
   applying the electric current to at least one second conductive fiber of the one or more second conductive fibers to heat the thermoplastic matrix material of the additively manufactured structure for consolidation of the second textile substrate with the thermoplastic matrix material to form a second thermoplastic composite on the surface.
Clause 33. The method of Clause 32 the method further comprising:
   cutting a third textile substrate comprising one or more third conductive fibers from the first textile fabric sheet or a third textile fabric sheet such that the third textile substrate is tailored to fit a third portion of the surface of the additively manufactured structure;
   draping the third textile substrate over the third portion of the surface; and
   applying the electric current to at least one third conductive fiber of the one or more third conductive fibers to heat the thermoplastic matrix material of the additively manufactured structure for consolidation of the third textile substrate with the thermoplastic matrix material to form a third thermoplastic composite on the surface.
Clause 34. The method of any of Clauses 1 to 33, further comprising:
   adding the one or more conductive fibers to a carrier substrate to form the textile substrate, the one or more conductive fibers forming one or more paths distributed about the textile substrate.
Clause 35. The method of Clause 34 wherein the one or more conductive fibers are added to the carrier substrate using tailored fiber placement.
Clause 36. The method of Clause 34 or 35, wherein the one or more conductive fibers comprise at least one of carbon reinforcement fibers, aramid reinforcement fibers, metal reinforcement fibers, copper reinforcement fibers and aluminum reinforcement fibers.
Clause 37. The method of any of Clauses 34 to 36, wherein the carrier substrate comprises at least one of a woven fabric ply, a braided fabric ply, a knitted fabric ply, a woven film substrate, a woven mesh substrate, a non-woven fabric substrate, a plastic film substrate, a laminate film substrate and a mesh screen substrate.
Clause 38. The method of any of Clauses 34 to 37, wherein the carrier substrate comprises at least one of non-conductive reinforcement fibers, glass reinforcement fibers and nylon reinforcement fibers.
Clause 39. The method of any of Clauses 34 to 38, wherein the carrier substrate is sized to cover the surface of the additively manufactured structure or at least the portion of the surface over which the textile substrate is draped.
Clause 40. The method of any of Clauses 34 to 39, further comprising:
   cutting the carrier substrate from a carrier sheet such that the carrier substrate is tailored to fit the surface of the additively manufactured structure or at least the portion of the surface over which the textile substrate is draped.
Clause 41. The method of any of Clauses 34 to 40, the adding of the one or more conductive fibers comprising:
   embroidering at least one of the one or more conductive fibers to the carrier substrate.
Clause 42. The method of any of Clauses 34 to 41, the adding of the one or more conductive fibers comprising:
   sewing
Clause 43. The method of any of Clauses 34 to 42, wherein the carrier substrate is cut from a first carrier sheet such that the carrier substrate is tailored to fit a first portion of the surface of the additively manufactured structure, the method further comprising:
   cutting a second carrier substrate from the first carrier sheet or a second carrier sheet such that the second carrier substrate is tailored to fit a second portion of the surface;
   adding one or more second conductive fibers to the second carrier substrate to form a second textile substrate, the one or more second conductive fibers forming one or more second paths distributed about the second textile substrate;
   draping the second textile substrate over the second portion of the surface; and
   applying the electric current to at least one second conductive fiber of the one or more second conductive fibers to heat the thermoplastic matrix material of the additively manufactured structure for consolidation of the second textile substrate with the thermoplastic matrix material to form a second thermoplastic composite on the surface.
Clause 44. The method of Clause 43, the method further comprising:
   cutting a third carrier substrate from the first carrier sheet or a third carrier sheet such that the third carrier substrate is tailored to fit a third portion of the surface of the additively manufactured structure;
   adding one or more third conductive fibers to the third carrier substrate to form a third textile substrate, the one or more third conductive fibers forming one or more third paths distributed about the third textile substrate;
   draping the third textile substrate over the third portion of the surface; and
   applying the electric current to at least one third conductive fiber of the one or more third conductive fibers to heat the thermoplastic matrix material of the additively manufactured structure for consolidation of the third textile substrate with the thermoplastic matrix material to form a third thermoplastic composite on the surface.
Clause 45. A method for reinforcing an additively manufactured structure, the method comprising:
   adding a first conductive fiber to a fiber reinforcement fabric substrate to form a textile substrate, the first conductive fiber forming a first path distributed about at least a first area of the textile substrate;
   cutting the textile substrate to form a tailored fabric substrate that fits a surface of the additively manufactured structure, the additively manufactured structure comprising a thermoplastic matrix material;
   wrapping the tailored fabric substrate around the surface; and
   applying an electric current to the first conductive fiber to heat the thermoplastic matrix material of the additively manufactured structure for consolidation of the tailored fabric substrate with the thermoplastic matrix material to form a first thermoplastic composite on the surface and thereby form a fiber-reinforced additively manufactured structure.
Clause 46. The method of Clause 45, wherein the additively manufactured structure comprises an outer portion and an inner portion, the outer portion comprising the thermoplastic matrix material, the inner portion comprising another material different from the thermoplastic matrix material.
Clause 47. The method of Clause 46, wherein the another material comprises at least one of a polymer material, a ceramic material and a metal material.
Clause 48. The method of any of Clauses 45 to 47, wherein the thermoplastic matrix material comprises at least one of an acrylic matrix material, a polycarbonate matrix material, a polyphenylene sulfide matrix material, a polypropylene matrix material, a polystyrene matrix material, a polysulphone matrix material and a polyvinylchloride matrix material.
Clause 49. The method of any of Clauses 45 to 48, wherein the additively manufactured structure was fabricated using a three-dimensional printer.
Clause 50. The method of any of Clauses 45 to 49, wherein the additively manufactured structure was fabricated using fused deposition modelling.
Clause 51. The method of any of Clauses 45 to 50, wherein the first conductive fiber is added to the fiber reinforcement fabric substrate using tailored fiber placement.
Clause 52. The method of any of Clauses 45 to 51, wherein the fiber reinforcement fabric substrate comprises at least one of a woven fabric ply, a woven film substrate and a woven mesh substrate.
Clause 53. The method of any of Clauses 45 to 52, wherein the fiber reinforcement fabric substrate comprises at least one of non-conductive reinforcement fibers, glass reinforcement fibers, nylon reinforcement fibers, conductive reinforcement fibers, carbon reinforcement fibers, metal reinforcement fibers, copper reinforcement fibers and aluminum reinforcement fibers.
Clause 54. The method of any of Clauses 45 to 53, wherein the fiber reinforcement fabric substrate comprises reinforcement fibers pre-impregnated with a resin matrix material.
Clause 55. The method of any of Clauses 45 to 54, wherein the fiber reinforcement fabric substrate is sized to cover the surface of the additively manufactured structure.
Clause 56. The method of any of Clauses 45 to 55, wherein the first conductive fiber comprises at least one of a carbon fiber, an aramid fiber, a metal fiber, a copper fiber and an aluminum fiber.
Clause 57. The method of any of Clauses 45 to 56, wherein the first conductive fiber comprises an insulation coating.
Clause 58. The method of any of Clause 45 to 57, the adding of the first conductive fiber comprising:
   embroidering the first conductive fiber to the fiber reinforcement fabric substrate.
Clause 59. The method of any of Clauses 45 to 58, the adding of the first conductive fiber comprising:
   sewing the first conductive fiber to the fiber reinforcement fabric substrate.
Clause 60. The method of any of Clauses 45 to 59, the wrapping of the tailored fabric substrate comprising:
   tacking the tailored fabric substrate to the surface of the additively manufactured structure in conjunction with the wrapping.
Clause 61. The method of Clause 60, the wrapping of the tailored fabric substrate further comprising:
   cutting off overlapping portions of the tailored fabric substrate during the wrapping and tacking to form a tailored substrate that fits the surface.
Clause 62. The method of any of Clauses 45 to 61, further comprising:
   removing the electric current from the first conductive fiber.
Clause 63. The method of any of Clauses 45 to 62, further comprising:
   trimming the first thermoplastic composite to remove waste materials resulting from consolidation of the tailored fabric substrate with the thermoplastic matrix material.
Clause 64. The method of any of Clauses 45 to 63, further comprising:
   curing the first thermoplastic composite on the surface of the additively manufactured structure to form the fiber-reinforced additively manufactured structure.
Clause 65. The method of Clause 64 wherein the curing of the first thermoplastic composite is performed using at least one of a local ambient curing process, a local heating process, an oven curing process, an ultraviolet light curing process, a visible light curing process, a direct electric heating process, a microwave heating process, an induction heating process and a radio frequency heating process.
Clause 66. The method of any of Clauses 45 to 65, further comprising:
   adding a second conductive fiber to the textile substrate, the second conductive fiber forming a second path distributed about a second area of the textile substrate; and
   applying the electric current to heat the second conductive fiber for further consolidation of the tailored fabric substrate with the thermoplastic matrix material of the additively manufactured structure to form a second thermoplastic composite on the surface and thereby further form the fiber-reinforced additively manufactured structure.
Clause 67. The method of Clause 66, further comprising:
   adding a third conductive fiber to the textile substrate, the third conductive fiber forming a third path distributed about a third area of the textile substrate; and
   applying the electric current to heat the third conductive fiber for further consolidation of the tailored fabric substrate with the thermoplastic matrix material of the additively manufactured structure to form a third thermoplastic composite on the surface and thereby further form the fiber-reinforced additively manufactured structure.
Clause 68. A system for reinforcing an additively manufactured structure, the system comprising:
   a fabrication tool set;
   an electrical power source; and
   a control device in operative communication with the electrical power source to selectively apply and remove electric current from one or more conductive fibers of a textile substrate, and
   wherein the textile substrate is configured for draping over at least a portion of a surface of the additively manufactured structure, the additively manufactured structure comprising a thermoplastic matrix material, and
   wherein the control device and the electrical power source are configured to apply the electric current to at least one conductive fiber of the one or more conductive fibers to heat the thermoplastic matrix material of the additively manufactured structure for consolidation of the textile substrate with the thermoplastic matrix material to form a thermoplastic composite on the surface.
Clause 69. The system of Clause 68 wherein the additively manufactured structure was fabricated using a three-dimensional printer.
Clause 70. The system of Clause 68 or 69, wherein the additively manufactured structure was fabricated using fused deposition modelling.
Clause 71. The system of any of Clauses 68 to 70, wherein the textile substrate is sized to cover the surface of the additively manufactured structure or at least the portion of the surface of the additively manufactured structure.
Clause 72. The system of any of Clauses 68 to 71, the fabrication tool set comprising:
   a cutting tool configured to cut a fiber reinforcement fabric substrate from a fiber reinforcement fabric sheet such that the fiber reinforcement fabric substrate is tailored to fit the surface of the additively manufactured structure or at least the portion of the surface of the additively manufactured structure over which the textile substrate is draped.
Clause 73. The system of any of Clauses 68 to 72, the fabrication tool set comprising:
   a tacking tool configured to tack the textile substrate to the surface of the additively manufactured structure in conjunction with the draping of the of the textile substrate.
Clause 74. The system of any of Clauses 68 to 73, wherein the textile substrate is configured for being wrapped around the surface of the additively manufactured structure, the fabrication tool set comprising:
   a tacking tool configured to tack the textile substrate to the surface in conjunction with the wrapping of the textile substrate.
Clause 75. The system of Clause 74, the fabrication tool set further comprising:
   a cutting tool configured to cut off overlapping portions of the textile substrate in conjunction with the wrapping and tacking of the textile substrate to form a tailored substrate that fits the surface.
Clause 76. The system of any of Clauses 68 to 75, wherein the control device and the electrical power source are configured to apply the electric current to additional conductive fibers of the one or more conductive fibers to further heat the thermoplastic matrix material of the additively manufactured structure for further consolidation of the textile substrate with the thermoplastic matrix material of the additively manufactured structure to further form the thermoplastic composite.
Clause 77. The system of Clause 76, wherein the control device and the electrical power source are configured to remove the electric current from the additional conductive fibers.
Clause 78. The system of any of Clauses 68 to 77, wherein the consolidation of the textile substrate with the thermoplastic matrix material is based at least in part on the electric current being applied to the at least one conductive fiber for a predetermined time, the control device comprising:
   a timing device configured to monitor a time the electric current was applied to the at least one conductive fiber, and
   wherein the control device and the electrical power source are configured to remove the electric current from the at least one conductive fiber after the timing device indicates the time the electric current was applied exceeds the predetermined time.
Clause 79. The system of any of Clauses 68 to 78, wherein the consolidation of the textile substrate with the thermoplastic matrix material is based at least in part on the thermoplastic matrix material being heated to a predetermined temperature, the system further comprising:
   a temperature sensor in operative communication with the control device and disposed on the additively manufactured structure proximate the at least one conductive fiber, the temperature sensor configured to monitor a temperature of the thermoplastic matrix material proximate the at least one conductive fiber, and
   wherein the control device and the electrical power source are configured to remove the electric current from the at least one conductive fiber after the temperature sensor indicates the temperature exceeds the predetermined temperature.
Clause 80. The system of any of Clauses 68 to 79, wherein the consolidation of the textile substrate with the thermoplastic matrix material is based at least in part on applying a compressive force to the textile substrate, the fabrication tool set comprising:
   a consolidation tool configured to apply a compressive force to the textile substrate for consolidation of the textile substrate with the thermoplastic matrix material.
Clause 81. The system of Clause 80, wherein the consolidation tool comprises at least one of a weighted cover and a vacuum bagging subsystem.
Clause 82. The system of any of Clauses 68 to 81, wherein the control device and the electrical power source are configured to remove the electric current from the at least one conductive fiber.
Clause 83. The system of any of Clauses 68 to 82, the fabrication tool set comprising:
   a curing subsystem configured to cure the thermoplastic composite on the surface of the additively manufactured structure to form a fiber-reinforced additively manufactured structure. Clause 84. The system of Clause 83, wherein the curing subsystem comprises at least one of a local heating device, an oven curing device, an ultraviolet light curing device, a visible light curing device, a direct electric heating device, a microwave heating device, an induction heating device and a radio frequency heating device.
Clause 85. The system of any of Clauses 68 to 84, the fabrication tool set comprising:
   a trimming tool configured to trim the thermoplastic composite to remove waste materials.
Clause 86. The system of any of Clauses 68 to 85, the fabrication tool set comprising:
   a cutting tool configured to cut the textile substrate from a first textile fabric sheet such that the textile substrate is tailored to fit a first portion of the surface of the additively manufactured structure, and
   wherein the cutting tool is configured to cut a second textile substrate from the first textile fabric sheet or a second textile fabric sheet such that the second textile substrate is tailored to fit a second portion of the surface, and
   wherein the second textile substrate is configured for draping over the second portion of the surface, and
   wherein the control device and the electrical power source are configured to apply the electric current to at least one second conductive fiber of the one or more second conductive fibers to heat the thermoplastic matrix material of the additively manufactured structure for consolidation of the second textile substrate with the thermoplastic matrix material to form a second thermoplastic composite on the surface.
Clause 87. The system of Clause 86, wherein the cutting tool is configured to cut a third textile substrate from the first textile fabric sheet or a third textile fabric sheet such that the third textile substrate is tailored to fit a third portion of the surface, and
   wherein the third textile substrate is configured for draping over the third portion of the surface, and
   wherein the control device and the electrical power source are configured to apply the electric current to at least one third conductive fiber of the one or more third conductive fibers to heat the thermoplastic matrix material of the additively manufactured structure for consolidation of the third textile substrate with the thermoplastic matrix material to form a third thermoplastic composite on the surface.
Clause 88. The system of any of Clauses 68 to 87, the fabrication tool set comprising:
   a fiber adding tool configured to add the one or more conductive fibers to a carrier substrate to form the textile substrate, the one or more conductive fibers forming one or more paths distributed about the textile substrate.
Clause 89. The system of Clause 88, wherein the one or more conductive fibers are added to the carrier substrate using tailored fiber placement.
Clause 90. The system of Clause 88 or 89, wherein the carrier substrate is sized to cover the surface of the additively manufactured structure or at least the portion of the surface over which the textile substrate is draped.
Clause 91. The system of any of Clauses 88 to 90, the fiber adding tool comprising:
   an embroidery machine configured to embroider at least one of the one or more conductive fibers to the carrier substrate.
Clause 92. The system of any of Clauses 88 to 91, the fiber adding tool comprising:
   a sewing machine configured to sew at least one of the one or more conductive fibers to the carrier substrate.
Clause 93. The system of any of Clauses 88 to 92, the fabrication tool set further comprising:
   a cutting tool configured to cut the carrier substrate from a carrier sheet such that the carrier substrate is tailored to fit the surface of the additively manufactured structure or at least the portion of the surface over which the textile substrate is draped.
Clause 94. The system of Clause 93, wherein the cutting tool is configured to cut the carrier substrate from a first carrier sheet such that the carrier substrate is tailored to fit a first portion of the surface of the additively manufactured structure, and
   wherein the cutting tool is configured to cut a second carrier substrate from the first carrier sheet or a second carrier sheet such that the second carrier substrate is tailored to fit a second portion of the surface, and
   wherein the fiber adding tool is configured to add one or more second conductive fibers to the second carrier substrate to form a second textile substrate, the one or more second conductive fibers forming one or more second paths distributed about the second textile substrate, and
   wherein the second textile substrate is configured for draping over the second portion of the surface, and
   wherein the control device and the electrical power source are configured to apply the electric current to at least one second conductive fiber of the one or more second conductive fibers to heat the thermoplastic matrix material of the additively manufactured structure for consolidation of the second textile substrate with the thermoplastic matrix material to form a second thermoplastic composite on the surface.
Clause 95. The system of Clause 94, wherein the cutting tool is configured to cut a third carrier substrate from the first carrier sheet or a third carrier sheet such that the third carrier substrate is tailored to fit a third portion of the surface of the additively manufactured structure, and
   wherein the fiber adding tool is configured to add one or more third conductive fibers to the third carrier substrate to form a third textile substrate, the one or more third conductive fibers forming one or more third paths distributed about the third textile substrate, and
   wherein the third textile substrate is configured for draping over the third portion of the surface, and
   wherein the control device and the electrical power source are configured to apply the electric current to at least one third conductive fiber of the one or more third conductive fibers to heat the thermoplastic matrix material of the additively manufactured structure for consolidation of the third textile substrate with the thermoplastic matrix material to form a third thermoplastic composite on the surface.

The disclosed methods 100, 500, 600, 1000, 1100, 1200, 1300, 1400, 1500, 1600, 1900, 2000, 2200, 2500, 2800, 2900, 3600, 3700, 3800 and systems 3900, 4000 for reinforcing additively manufactured structures 200 may be employed during any one or more of the stages of the manufacturing and service method 4100. For example, components or subassemblies corresponding to component and subassembly manufacturing (block 4106) may be fabricated or manufactured in a manner similar to components or subassemblies produced while aircraft 4200 is in service (block 4112). Also, one or more examples of the system(s), method(s) or combination thereof may be utilized during production stages (block 4106 and block 4108), for example, by substantially expediting assembly of or reducing the cost of aircraft 4200. Similarly, one or more examples of the system or method realizations or a combination thereof, may be utilized, for example and without limitation, while aircraft 4200 is in service (block 4112) and/or during maintenance and service (block 4114).

The described features, advantages and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the methods 100, 500, 600, 1000, 1100, 1200, 1300, 1400, 1500, 1600, 1900, 2000, 2200, 2500, 2800, 2900, 3600, 3700, 3800 and systems 3900, 4000 for reinforcing additively manufactured structures 200 have been shown and described, modifications may occur to those skilled in the art upon reading the specification. The present application includes such modifications and is limited only by the scope of the claims.

## Claims

1. A method (100) for reinforcing an additively manufactured structure (200), the method comprising:
draping (102) a textile substrate (300) comprising one or more conductive fibers (302) over at least a portion (212) of a surface (210) of the additively manufactured structure (200), the additively manufactured structure (200) comprising a thermoplastic matrix material (202); and
applying (104) an electric current (402) to at least one conductive fiber (302) of the one or more conductive fibers (302) to heat the thermoplastic matrix material (202) of the additively manufactured structure (200) for consolidation of the textile substrate (300) with the thermoplastic matrix material (202) to form a thermoplastic composite (404) on the surface (210).

2. The method of Claim 1, wherein the applying (104) of the electric current (402) to the at least one conductive fiber (302) on the surface (210) of the additively manufactured structure (200) forms a fiber-reinforced additively manufactured structure (406).

3. The method of Claim 1 or 2, wherein the additively manufactured structure (200) comprises an outer portion (204) and at least the outer portion (204) comprises the thermoplastic matrix material (202).

4. The method of any of Claims 1 to 3, wherein the additively manufactured structure (200) comprises an inner portion (206) and the inner portion (206) comprises another material (208) different from the thermoplastic matrix material (202).

5. The method of any of Claims 1 to 4, wherein the textile substrate (300) comprises a plurality of the conductive fibers (302) arranged in a first direction (304) and a plurality of non-conductive fibers (306) arranged in a second direction (308) that crosses the first direction (304).

6. The method of any of Claims 1 to 5, wherein the textile substrate (300) comprises reinforcement fibers pre-impregnated with a resin matrix material.

7. The method of any of Claims 1 to 6, further comprising:
cutting (502) the textile substrate (300) from a textile fabric sheet (700) such that the textile substrate (300) is tailored to fit the surface (210) of the additively manufactured structure (200) or at least the portion (212) of the surface (210) over which the textile substrate (300) is draped.

8. The method of any of Claims 1 to 7, wherein the one or more conductive fibers (302) comprise at least one of one or more carbon fibers, one or more aramid fibers, one or more metal fibers, one or more copper fibers and one or more aluminum fibers.

9. The method of any of Claims 1 to 8, wherein at least one of the one or more conductive fibers (302) comprises an insulation coating.

10. The method (600) of any of Claims 1 to 9, further comprising:
tacking (602) the textile substrate (300) to the surface (210) of the additively manufactured structure (200) in conjunction with the draping (102) of the textile substrate (300).

11. The method of any of Claims 1 to 10, the draping (102) of the textile substrate (300) comprising:
wrapping (802) the textile substrate (300) around the surface (210) of the additively manufactured structure (200); and
tacking (804) the textile substrate (300) to the surface (210) of the additively manufactured structure (200) in conjunction with the wrapping (802).

12. The method (1000) of any of Claims 1 to 11, further comprising:
applying (1002) the electric current (402) to additional conductive fibers (302) of the one or more conductive fibers (302) to further heat the thermoplastic matrix material (202) of the additively manufactured structure (200) for further consolidation of the textile substrate (300) with the thermoplastic matrix material (202) of the additively manufactured structure (200) to further form the thermoplastic composite (404) on the surface (210).

13. The method (1100) of any of Claims 1 to 12, wherein the consolidation of the textile substrate (300) with the thermoplastic matrix material (202) is based at least in part on the electric current (402) being applied to the at least one conductive fiber (302) for a predetermined time, the method further comprising:
monitoring (1102) a time the electric current (402) was applied to the at least one conductive fiber (302); and
removing (1104) the electric current (402) from the at least one conductive fiber (302) after the time the electric current (402) was applied exceeds the predetermined time.

14. A method (2900) for reinforcing an additively manufactured structure (200), the method comprising:
adding (2902) a first conductive fiber (3002) to a fiber reinforcement fabric substrate (3004) to form a textile substrate (3000), the first conductive fiber (3002) forming a first path (3006) distributed about at least a first area (3008) of the textile substrate (3000);
cutting (2904) the textile substrate (3000) to form a tailored fabric substrate (3100) that fits a surface (210) of the additively manufactured structure (200), the additively manufactured structure (200) comprising a thermoplastic matrix material (202);
wrapping (2906) the tailored fabric substrate (3100) around the surface (210); and
applying (2908) an electric current (3202) to the first conductive fiber (3002) to heat the thermoplastic matrix material (202) of the additively manufactured structure (200) for consolidation of the tailored fabric substrate (3100) with the thermoplastic matrix material (202) to form a first thermoplastic composite (3204) on the surface (210) and thereby form a fiber-reinforced additively manufactured structure (3206).

15. A system (3900) for reinforcing an additively manufactured structure (200), the system comprising:
a fabrication tool set (3902);
an electrical power source (3904); and
a control device (3906) in operative communication with the electrical power source (3904) to selectively apply and remove electric current (402) from one or more conductive fibers (302) of a textile substrate (300), and
wherein the textile substrate (300) is configured for draping over at least a portion (212) of a surface (210) of the additively manufactured structure (200), the additively manufactured structure (200) comprising a thermoplastic matrix material (202), and
wherein the control device (3906) and the electrical power source (3904) are configured to apply the electric current (402) to at least one conductive fiber (302) of the one or more conductive fibers (302) to heat the thermoplastic matrix material (202) of the additively manufactured structure (200) for consolidation of the textile substrate (300) with the thermoplastic matrix material (202) to form a thermoplastic composite (404) on the surface (210).
